## Europäisches Patentamt

## European Patent Office

## Office européen des brevets

(19)

(11) Numéro de publication: **0 162 173**
**B1**

(12)
# FASCICULE DE BREVET EUROPEEN

(45) Date de publication du fascicule du brevet:
16.08.89

(51) Int. Cl.⁴: **H 04 L 11/20**

(21) Numéro de dépôt: 84430015.2

(22) Date de dépôt: 23.05.84

(54) Sytème numérique de transmission de la voix par paquets.

(43) Date de publication de la demande:
**27.11.85 Bulletin 85/48**

(45) Mention de la délivrance du brevet:
**16.08.89 Bulletin 89/33**

(84) Etats contractants désignés:
**DE FR GB IT**

(56) Documents cités:
REVUE DE PHYSIQUE APPLIQUEE, vol. 19, no. 2, février 1984, pages 121-126, Orsay, FR; A. DURAND et al.: "Transmission simultanée de voix et données"
IEEE GLOBAL TELECOMMUNICATIONS CONFERENCE, San Diego, 28 novembre - 1er décembre 1983, pages 2.1.1 - 2.1.6, IEEE, US; J.S. TURNER et al.: "A packet network architecture for integrated services"
IEEE GLOBAL TELECOMMUNICATIONS CONFERENCE, San Diego, 28 novembre - 1er décembre 1983, vol. 1, pages 2.6.1 - 2.6.5, IEEE, US; G. BARBERIS et al.: "Coded speech in packet-switched networks: Models and experiments"
NATIONAL TELECOMMUNICATIONS CONFERENCE, Washington, D.C., 27-29 novembre 1979, vol. 1, pages 13.1.1 - 13.1.5, IEEE, US; H. TANAKA et al.: "Design of a packet voice transmission system"
IEEE TRANSACTIONS ON COMMUNICATIONS, vol. COM-28, no. 4, avril 1980, pages 553-573, IEEE, New

(73) Titulaire: International Business Machines Corporation, Old Orchard Road, Armonk, N.Y. 10504 (US)
(84) Etats contractants désignés: **DE GB IT**

(73) Titulaire: **Compagnie IBM FRANCE, 5 Place Vendôme, F-75000 Paris 1er (FR)**
(84) Etats contractants désignés: **FR**

(72) Inventeur: **Callens, Paul, 26, Avenue des Tullières, F-06800 Cagnes-Sur-Mer (FR)**
Inventeur: **Noailly, Philippe, Les Grimonds - B 300 Allée des Cigales, F-06700 Saint Laurent du Var (FR)**
Inventeur: **Galand, Claude, 56, Avenue des Tullières, F-06800 Cagnes-Sur-Mer (FR)**
Inventeur: **Secondo, Pierre, Villa "La Ferrage" Rue de La Ferrage, F-06640 Saint Jeannet (FR)**
Inventeur: **Gergaud, Claude, 73, Chemin des Collettes, F-06800 Cagnes-Sur-Mer (FR)**

(74) Mandataire: Tubiana, Max, Compagnie IBM France Département de Propriété Industrielle, F-06610 La Gaude (FR)

(56) Documents cités: (suite)
York, US; M. GERLA et al.: "Flow control: A comparative survey"
NATIONAL TELECOMMUNICATIONS CONFERENCE 1978, CONFERENCE RECORD, Birmingham, Alabama, 3-6 décembre 1978, vol. 1, pages 12.3.1 - 12.3.5, IEEE, US; M.E. ULUG: "Protocol design for a transparent intelligent network"

# Description

La présente invention a pour objet un système de transmission numérique de la voix utilisant notamment les techniques dites de transmission par paquets.

Pour rentabiliser au mieux les installations de transmission numérique de la voix, on dispose de plusieurs techniques. On peut citer tout d'abord les techniques de multiplexage permettant de concentrer sur une même ligne de transmission les données provenant de plusieurs sources. Lorsque les sources travaillent de façon intermittente et aléatoire, comme c'est le cas pour des terminaux téléphoniques, le nombre de sources rattachées à la ligne de transmission à travers un réseau peut être supérieur à celui que la capacité instantanée de la ligne pourrait laisser prévoir. On utilise à cet effet des techniques dites DSI (Digital Speech Interpolation). Dans un réseau utilisant ce type de techniques, les bits de données en provenance de plusieurs sources sont assemblés en paquets de bits avant d'être transmis à leurs destinataires à travers un réseau de transmission. Le temps de transit à travers le réseau de transmission. Le temps de transit à travers le réseau peut varier d'un paquet à l'autre. Or, ce qui caractérise les communications vocales, c'est l'obligation d'un fonctionnement en temps réel. La régularité de soumission des paquets de bits d'origine vocale au récepteur pour que celui-ci puisse reconstituer le signal analogique à délivrer au destinataire doit être respectée aussi scrupuleusement que possible.

En outre, les conversations vocales se caractérisent aussi par des périodes d'activité entrecoupées de périodes de silences plus ou moins longues. Les avantages des techniques de type DSI permettent de rentabiliser au maximum les canaux de transmission à travers le réseau en comblant les périodes de silence d'une source donnée par les périodes d'activité d'une autre source dont l'information est à transmettre. Un dispositif dit détecteur d'activité vocale gère, à cet effet, l'ensemble des dispositifs de codage et de multiplexage des signaux fournis par les sources vocales. On constate cependant que, compte tenu des propriétés de la voix et de l'oreille humaines, certaines précautions sont à prendre pour redonner à l'information reçue par un destinataire, outre son aspect d'origine, un caractère plaisant à l'oreille. A cet effet, respecter la durée des silences a toujours la même importance. On verra plus loin l'importance des pauses dites courtes sur l'intelligibilité du message.

H. Tanaka et al ont décrit, dans un article intitulé, «Design of a Packet Voice Transmission System» présenté à la National Telecommunications Conference de Washington 27-29 Novembre 1979 un procédé permettant de respecter la chronologie des paquets en assignant à chacun d'eux, au départ, une étiquette d'horaire (time stamp).

De même, J.S. Turner et al, ont publié à la «IEEE Global Telecommunications Conference» de San Diego 28 Novembre - 1er Décembre 83, un article intitulé «A Packet Network Architecture for Integrated Services», dans lequel on retrouve ce même usage de «time stamp». Ce système prend, en outre, en compte, les temps de silence durant lesquels la transmission de paquets correspondants peut être interrompue permettant une compression du trafic donc une meilleure utilisation du canal de transmission.

On retrouve cette même notion de compression des silences dans l'article intitulé «Protocol Design for a Transparent Intelligent Network» présenté par M.E. Olug à la «National Telecommunications Conference» de Birmingham, Alabama, 3–6 Décembre 1978.

La mise en œuvre de ces procédés peut être considérablement améliorée en définissant judicieusement le champ «time stamp» ainsi que son fonctionnement en combinaison avec les silences de manière à permettre une reconstitution agréable du signal transmis.

La présente invention a pour objet un système numérique de transmission de la voix par paquets de bits, utilisant les techniques de type DSI et disposant de moyens permettant, à la réception de reconstituer des signaux vocaux agréables à l'oreille et aussi fidèles que possibles.

D'autres objets caractéristiques et avantages de la présente invention ressortiront de la description suivante, faite en se référant aux dessins annexés.

Fig. 1 schéma général d'un réseau de communication auquel s'applique l'invention.

Fig. 2 et 3 diagrammes illustrant la transmission de la voix par paquets.

Fig. 4 format d'un paquet de bits.

Fig. 5 schéma du réseau de communication entre deux combinés téléphoniques T1 et T2.

Fig. 6 schéma illustrant des opérations de mises en queues à travers le réseau.

Fig. 7 illustre le déroulement des opérations de réception.

Fig. 8 et 9 illustrent des étapes de traitement du signal durant les opérations d'émission et de réception.

Fig. 10 et 11 schémas de certains éléments d'un émetteur selon l'invention.

Fig. 12 schéma de certains éléments d'un récepteur selon l'invention.

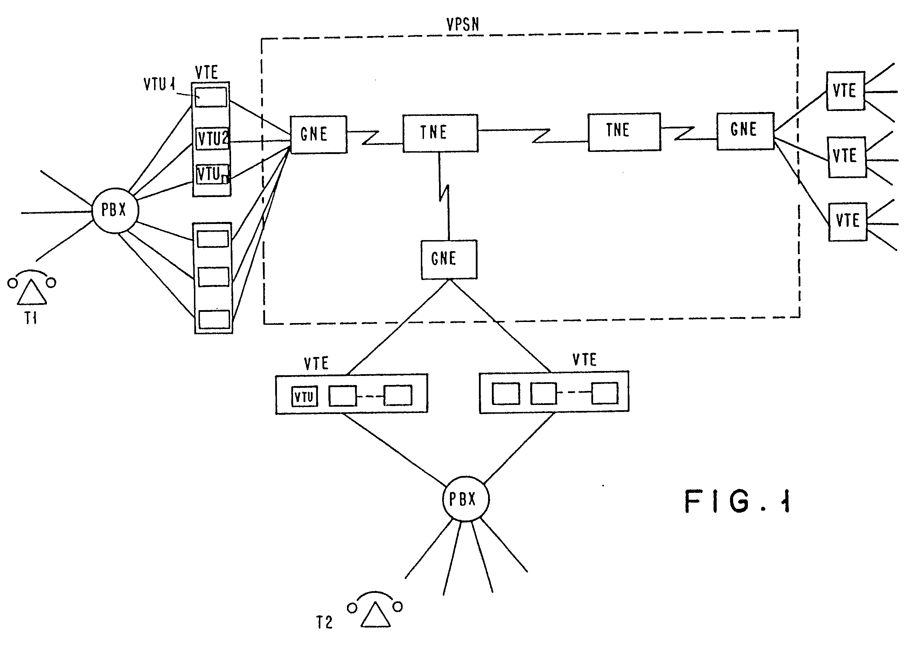

La figure 1 représente un schéma général d'un type de réseau de communication auquel s'applique l'invention. Les combinés ou terminaux téléphoniques (T) des abonnés sont rattachés à des unités de commutation téléphonique (PBX). Les lignes sortant des unités de commutation et assignées à un instant donné à des terminaux téléphoniques représentant des sources en fonctionnement, passent par des unités terminales de voix (VTU) effectuant un codage numérique et, éventuellement une compression de la voix. Chaque unité VTU scinde le signal vocal qu'elle reçoit, en tronçons de 20 ms de durée et chaque tronçon, une fois codé, fournit un bloc de bits. Pour effectuer les opérations de codage, on pourra notamment utiliser des codeurs utilisant des techniques de type dit BCPCM (Block Companded PCM), codeurs semblables à celui décrit dans le brevet européen EP-A 0 002 998. Comme le montre la figure 1, plusieurs unités terminales, VTU1, VTU2..., VTUn sont regroupées au sein d'un même équipement terminal (VTE). L'équipement terminal est chargé non seulement de gérer les transferts de bits sortant des codeurs et allant vers le réseau, mais doit en outre s'occuper d'autres fonctions tels que signalisation téléphonique, détection d'activité (VAD) etc. ... L'équipement terminal VTE possède un moyen de balayage (non représenté) qui balaye séquentiellement les unités terminales (VTU) de codage qui lui sont rattachées pour y prélever des blocs de données à transmettre. En supposant que les unités terminales soient groupées par huit au sein d'un même équipement terminal VTE, on peut admettre que toutes les 5 millisecondes (ms), deux blocs de bits dérivant du codage d'une portion de 40 ms de signal sortent du VTE. Ces deux blocs de bits complétés par des bits de délimitation, de service, de contrôle et d'adresse du destinataire, sont assemblés pour former un paquet de bits qui est transmis vers un nœud (GNE) d'entrée/sortie de réseau de commutation de paquets de voix (dit ici réseau VPSN ou tout simplement VPSN). Les paquets de bits sont orientés vers leurs destinataires en passant par des équipements de nœuds de transit (TNE). A chaque nœud, des bits d'adresse et de service sont lus pour assurer le transfert du paquet considéré. Les transferts d'un nœud à un autre se font après passage dans les files d'attente dont les longueurs fluctuent au rythme du trafic. Donc, si les paquets de bits étaient délivrés à leurs destinataires au fur et à mesure de leur arrivée, le message vocal reconstitué risquerait d'être fortement perturbé au point de compromettre la compréhension du message. Il faut donc prévoir des moyens permettant de résoudre ce problème. Avant de décrire ces moyens, nous allons préciser le fonctionnement du réseau de communication que l'on vient de décrire. Lorsque l'abonné du téléphone T1 demande un correspondant T2, et donc formule son numéro, une ligne de sortie de l'unité de commutation (PBX) auquel T1 est rattaché lui est affecté de manière conventionnelle. Cette ligne aboutit à une unité terminale de voix (VTU) appartenant à un équipement terminal de voix (VTE). Ce VTE, consultant une table de liaisons (non représentée) choisit un canal logique disponible parmi les canaux le reliant à un nœud d'entrée de réseau (GNE). Ce canal est alors affecté à la liaison en cours d'établissement. L'opération de sélection et d'affectation de canal, décrite ci-dessus, se poursuit de proche en proche au sein du réseau de commutation de paquets de voix (VPSN). Les nœuds de transit (TNE) et de sortie du réseau (GNE), ainsi que l'équipement terminal (VTE) à affecter à la liaison en cours d'établissement, sont ainsi définis. Une fois l'équipement terminal de voix (VTE) défini, la liaison avec le terminal demandé (T2) s'établit à travers une unité de commutation (PBX) en passant par une unité terminale de voix (VTU). La liaison ainsi établie entre T1 et T2 sera maintenue durant toute la communication entre ces deux abonnés.

Les passages par les nœuds se font à travers des files d'attente dont les longueurs fluctuent en fonction du trafic. Pour illustrer ce phénomène, on pourra se reporter à la demande de brevet intitulé: «Dispositif tampon utilisé dans un réseau de transmission de la voix» déposée par la demanderesse et publiée le 27 November 1985 sous le N° EP-A 0 162 174.

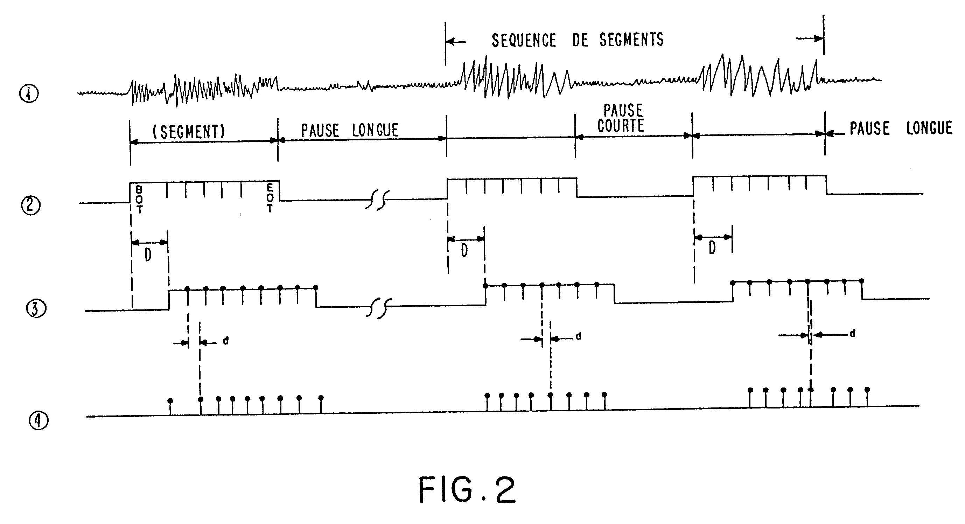

Comme on l'a déjà signalé plus haut, ces fluctuations de files d'attente perturbent les opérations de réception. La figure 2 permet d'illustrer schématiquement le phénomène mentionné ci-dessus. La première ligne représente par exemple le signal analogique se présentant à l'entrée du codeur (VTUi où i = 1 ou 2, ou...n) au terminal T1. On y remarque des zones comportant un segment de signal vocal (talkspurt) et des zones d'inactivité ou de pauses dites longues ou courtes selon qu'elles seront supérieures ou inférieures à une valeur prédéterminée, choisie ici égale à 1,28 seconde (32 × 40 ms). On désignera par séquence de segments de voix, l'espace entre deux pauses longues. En principe, seuls les segments de signal vocal doivent être transmis. Plus précisément, le VTUi effectue ses opérations de codage sans se préoccuper des pauses. Mais celles-ci sont signalées au VTE concerné, par un détecteur d'activité (non représenté), et le VTE élimine les données correspondant aux pauses du flot de bits qu'il transmet au nœud d'entrée (GNE). Pour réaliser l'opération de détection d'activité, on pourra utiliser, notamment, le dispositif décrit dans la demande de brevet EP-A 0 127 718 intitulée: «Procédé de détection d'activité dans un système de transmission de la voix et dispositif de mise en œuvre dudit procédé» déposée le 7 juin 1983 par la demanderesse et publiée le 12 Décembre 1984. On a représenté sur la deuxième ligne, les bits à transmettre par blocs représentant chacun 20 ms de signal codé par un VTU. On verra plus loin comment ces blocs de bits seront insérés dans des paquets. Chaque paquet contiendra notamment les bits de deux blocs. On notera que le premier paquet d'un segment de signal vocal est désigné par (BOT), le dernier par (EOT). Sur la troisième ligne ont été représentés les instants auxquels les paquets devraient être reçus par le destinataire, si le délai de transmission entre T1 et T2 était fixe et égal à «D» par exemple. Mais, comme on l'a indiqué plus haut, cela n'est pas conforme à la réalité. On a représenté par «d» le retard variable entre émission et réception d'un paquet, retard dont les variations sont dues notamment aux files d'attente dans les nœuds. En fait, donc, les instants d'arrivée des paquets de bits à leurs destinataires obéiraient plutôt au schéma de la ligne (4).

Il peut même arriver que des paquets manquent ou que leur ordre d'arrivée soit bouleversé. On comprend alors les problèmes à résoudre pour permettre au récepteur/décodeur du destinataire de l'information vocale de remettre les choses en ordre, c'est-à-dire pour lui permettre de reconstituer aussi fidèlement que possible le signal représenté sur la ligne (1) de la figure 2.

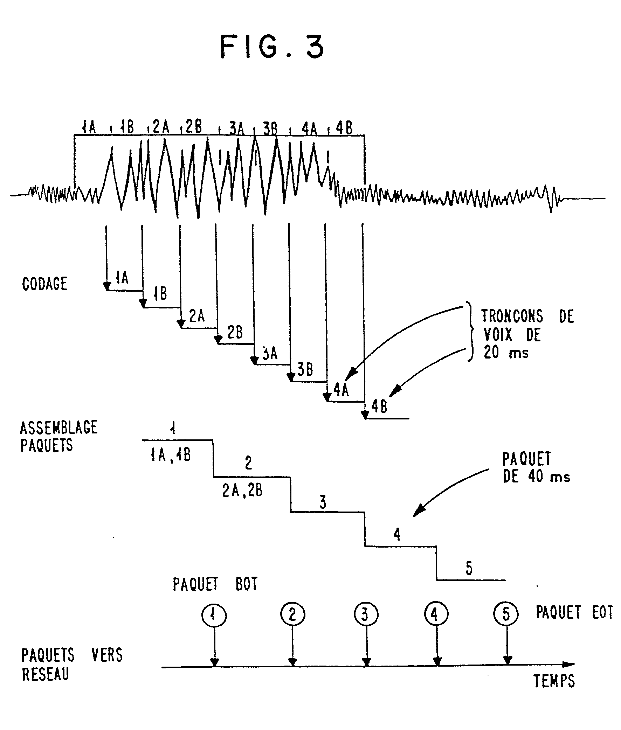

On a schématisé sur la figure 3, une représentation un peu plus détaillée du traitement d'un segment de signal vocal (talkspurt). Avant son émission vers le réseau de commutation de paquets de voix (VPSN), le segment est découpé en tronçons 1A, 1B, 2A, 2B, etc... de 20 ms de durée chacun. Chaque tronçon est soumis au codage numérique avec un retard de 20 ms. Les étapes du processus sont en pratique légèrement différentes de ce qui vient d'être énoncé. En effet, le signal analogique est tout d'abord codé numériquement en PCM conventionnel à 12 bits par échantillon avant d'être soumis à une compression réalisée en BCPCM par tronçons de 20 ms de durée. Les tronçons codés en BCPCM sont groupés par deux (1A et 1B; 2A et 2B; etc...) pour être insérés dans des paquets de bits. Chaque paquet de bits contenant $2 \times 20$ ms de signal vocal est complété par l'équipement terminal de voix (VTE) pour être mis sous un format HDLC ou SDLC que l'on définira plus loin. L'équipement terminal de voix dispose d'un moyen de balayage synchrone (non représenté) des unités terminales de voix qui lui sont associées. Toutes les 40 ms, le moyen de balayage prélève un paquet de chaque unité terminale en activité pour le transmettre vers le réseau VPSN.

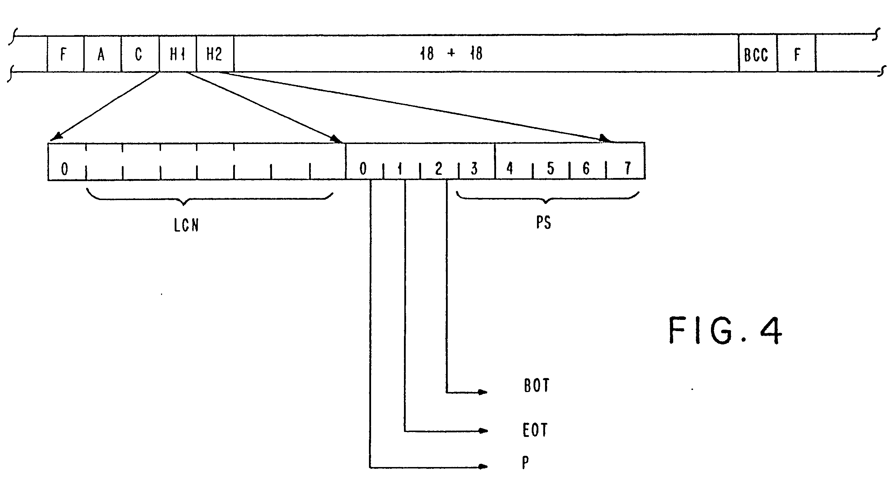

La figure 4 représente le format d'un paquet de bits tel qu'il est organisé dans le système de transmission au niveau de l'équipement terminal de voix (VTE) de départ. Les champs F, A, C, BCC, F sont ceux définis en SDLC (pour plus de précision, voir Norme ISO IS 3309). Les champs (F) contiennent des octets dits de drapeau de la forme 01111110 (7E en hexadécimal). Le second octet (A) indique l'adresse du terminal (VTE) d'origine. Le troisième octet (C) contrôle la direction de la communication. Quant au champ BCC, il est constitué par deux caractères (octets) de vérification de transmission. Le paquet contient aussi deux octets d'en-tête (headers) H1 et H2. H1 est utilisé pour orienter le paquet à travers le réseau, entre équipements terminaux de voix d'entrée et de sortie du réseau. On peut donc imaginer que H1 contienne notamment un numéro de canal logique (LCN) définissant le canal entre un GNE et un TNE consécutifs ou entre deux TNE consécutifs du trajet reliant deux terminaux concernés. H1 est donc mis à jour de proche en proche selon une technique semblable à celle faisant l'objet de la recommandation CCITT X.25. Le second octet d'en-tête, H2, est plus important pour ce qui concerne la présente invention. Ses positions de bits ont été numérotées 0 à 7 sur la figure 4. Le bit zéro, désigné par P, est dit drapeau de parité. Le bit 1, désigné par EOT est un drapeau de fin de segment de signal vocal. Le bit 2, désigné par BOT, indique le début d'un segment de signal vocal. A noter que l'on a choisi ici de mettre les bits EOT ou BOT à zéro pour signaler une fin ou un début de segment de signal vocal. Quant aux bits 3 à 7, désignés par PS, ils indiquent le numéro de séquence du paquet. Ce numéro de séquence permet un comptage du temps modulo $32 \times 40$ ms. Les bits de données sont groupés en deux fois dix huit octets représentant en tout deux tronçons de 20 ms de signal vocal. Le bit de parité passe alternativement de 1 à zéro et inversement pour signaler un silence long. Il n'est pas modifié pour un silence court ($<1,28$ s).

Le contenu du champ PS, est forcé à zéro à la fin d'un silence long, c'est-à-dire lorsque le bit «P» change de valeur. Il est ensuite périodiquement incrémenté d'une unité toutes les 40 ms, qu'un paquet soit effectivement transmis ou pas. On a choisi ici de limiter le champ PS à cinq bits ce qui permet de compter modulo 32 en décimal. Bien que cette longueur de champ ne soit pas limitative, on estime ici qu'elle suffit pour permettre une mesure précise des pauses courtes puisque $32 \times 40$ ms = 1,28 seconde.

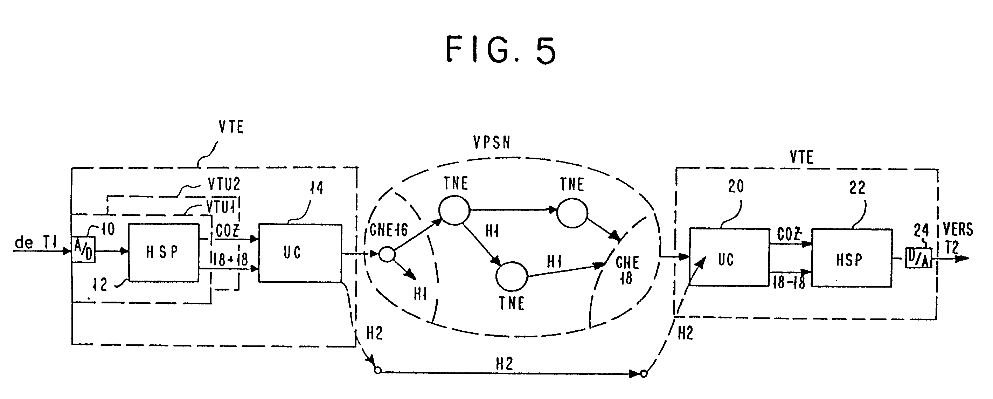

Pour illustrer le déroulement des opérations mettant en jeu les octets d'en-tête, on a schématisé sur la figure 5 le trajet de communication entre le terminal téléphonique T1 et son correspondant T2. Les signaux vocaux émis par l'abonné utilisant T1 sont convertis en numérique par un codeur PCM 10, qui filtre le signal dans la bande téléphonique (300–3200 Hz par exemple), l'échantillon à 8 kHz et code chaque échantillon en PCM à 12 bits. Le signal ainsi codé passe dans un dispositif compresseur (HSP) 12 qui traite successivement les échantillons PCM par blocs représentant chacun un tronçon de 20 ms de signal vocal. Cette compression peut se faire notamment à l'aide d'un codeur du genre décrit dans le brevet européen EP-A 0 002 998 cité plus haut. On y utilise donc les techniques BCPCM appliquées à un codage en sous-bandes avec distribution dynamique des bits de quantification. Ce codage est aussi dit de type VEPC. Pour chaque tronçon de 20 ms de voix, le compresseur 12 fournit dix huit octets de bits de données. Le compresseur fournit en outre des informations annexes dites de communication (COZ). Les informations annexes (COZ) comportent une information dite de détection d'activité vocale (VAD). Pour réaliser la fonction détection d'activité on pourra utiliser le détecteur d'activité cité plus haut. Ce dispositif permet de discriminer entre état d'activité et d'inactivité vocale lesdits états pouvant être traduits à l'aide d'un bit dit d'activité. Lorsque le bit fourni par le détecteur d'activité VAD (non représenté) et apparaissant dans les informations annexes (COZ) traduit une inactivité, ou autrement dit une pause, le paquet correspondant ne sortira en principe pas de l'équipement terminal de voix (VTE). On verra plus loin qu'en fait, les opérations sont légèrement plus complexes que celles qui viennent d'être décrites. L'ensemble 10, 12 représente les éléments essentiels d'une unité terminale de voix (VTU).

Comme on l'a indiqué plus haut, chaque paquet contient les données représentant deux tronçons de 20 ms de signal vocal fournis par le compresseur 12. On peut imaginer que fonctionnellement la construction de chaque paquet se fasse au sein de l'équipement terminal de voix (VTE) par un dispositif ou unité de contrôle (UC)14. Ce dispositif de contrôle est chargé de construire les en-têtes H1 et H2 avant d'envoyer le paquet vers un nœud d'entrée de réseau (16). En principe, les paquets qui représenteraient du silence pur, qu'il s'agisse d'une pause longue ou courte ne devraient pas être transmis au nœud d'entrée de réseau. Plus précisément, l'unité de contrôle 14 groupe les tronçons codés par le compresseur 12 par deux, et donc examine les bits d'activités par couple. Chaque couple peut prendre quatre valeurs, à savoir 00, 01, 10 ou 11. Les paquets correspondant au couple de bits d'activités 00 ne devraient en principe pas être transmis vers le nœud d'entrée de réseau 16. Par contre, ceux pour lesquels le couple de bits d'activité est 01, 10 ou 11 seraient transmis. On verra plus loin que la réalité est un peu plus complexe. On a représenté symboliquement sur la figure 5, le réseau de commutation de paquets de voix comportant plusieurs nœuds de transit et plusieurs trajets possibles entre le nœud d'entrée de réseau (GNE)16 et le nœud de sortie de réseau (GNE)18. Comme on l'a indiqué plus haut, la détermination du trajet réellement suivi par les paquets sortant du nœud d'entrée (GNE)16 est faite au début de l'établissement de la liaison entre T1 et T2 et reste dans le cas présent immuable pour une communication téléphonique. On pourrait imaginer, cependant qu'il en soit, autrement et qu'une unité de commande centrale (non représentée) gère le réseau. Tel n'est pas le cas dans l'exemple choisi pour être décrit ici. Les paquets destinés à T2 sortent du réseau VPSN par le nœud de sortie (GNE)18 et sont envoyés vers un équipement terminal de voix (VTE) affecté au service de T2 pour la communication téléphonique en cours. Une unité de contrôle (UC)20 va traiter chaque paquet reçu pour en extraire les 2 × 18 octets de données et des informations dites de communication (COZ) que l'on précisera plus loin. Pour l'instant, on retiendra qu'outre les données proprement dites découlant de la compression des tronçons de 20 ms de signal vocal, l'unité de contrôle 20 doit engendrer des informations permettant notamment de reconstituer les silences. Toutes ces informations sont, soit incluses directement dans H2 soit dérivées de son contenu, par l'unité 20. Le signal vocal est ensuite reconstruit dans un décodeur récepteur ou synthétiseur 22 utilisant les principes décrits dans le brevet européen EP-A 0 002 998 cité plus haut. Un convertisseur numérique analogique 24 placé à la sortie du synthétiseur 22 reconstitue le signal analogique à fournir au combiné téléphonique T2.

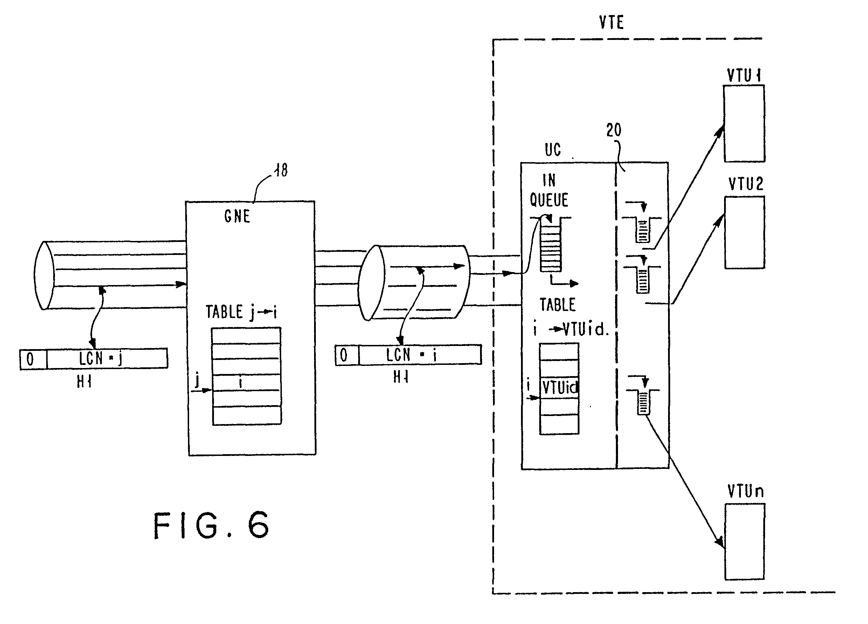

A signaler qu'en cours de transmission entre T1 et T2, certains paquets risquent de s'égarer, ou, ce qui revient au même, de s'altérer à un point tel que l'unité de contrôle 20 doive les rejeter. Tous ces paquets peuvent donc être considérés perdus. Les paquets perdus seront reconstruits en utilisant notamment les moyens décrits dans la demande de brevet EP-A 0 139 803 déposée le 28 octobre 1983, réalisant des opérations d'interpolation/extrapolation sous le contrôle de l'unité (UC)20. Cette disparition de paquets rend encore plus critique le phénomène de fluctuation de la fréquence de réception des paquets dans l'unité de contrôle 20 appartenant à l'équipement terminal de voix (VTE) desservant le terminal téléphonique T2. Avant de décrire les moyens mis en œuvre pour neutraliser l'effet de ces fluctuations, on va illustrer grâce à la figure 6, les opérations de mises en queues successives entre l'équipement de nœud de sortie (GNE)18 et l'unité terminale de voix (VTU) desservant T2.

Supposons que le paquet se présentant à l'entrée du nœud de sortie 18 comporte une entête H1 contenant un numéro de canal logique LCN = j. La valeur j sert à adresser, dans l'équipement de nœud 18, une table de conversion de j en i. L'entête H1 est donc modifié de manière telle que LCN = i dans le paquet sortant de l'équipement de nœud 18, ce qui permet d'envoyer ledit paquet vers l'équipement terminal (VTE) adéquat. Le paquet reçu par le VTE est mis dans une queue de réception dite IN QUEUE. Les paquets sont prélevés en sortie de la IN QUEUE à un rythme défini par l'unité de contrôle (UC)20, pour être transmis vers l'unité terminale de voix (VTU) désigné par l'indice «i» de l'en-tête H1. La détermination de l'unité terminale de voix concernée de fait là aussi par consultation d'une table TABLE (i → VTUid) contenue dans l'unité de contrôle (UC)20. L'entête H1 a alors terminé son rôle. Le paquet reçu par l'unité terminale de voix (VTE) est mis dans une file d'attente avant d'être transmis vers le décodeur (VTU) chargé de reconstituer le signal vocal à transmettre au terminal téléphonique T2.

De même qu'au départ de T1, le signal vocal avait été traité, c'est-à-dire notamment codé, de manière synchrone par tronçon de 20 ms puis mis en paquet au rythme de deux tronçons par paquet, de même, faut il à la réception décoder de manière synchrone le signal reçu. Or les fluctuations d'arrivée des paquets dans la queue du VTU, fluctuations dues aux variations du délai de transmission «d» (voir figure 2), peuvent perturber les possibilités de transmission synchrone au décodeur du VTU des bits de voix contenus dans les paquets. C'est le cas lorsque la queue du VTU est vide à cause des fluctuations de «d». Bien que l'on utilise ici des procédés de reconstitution de paquets perdus, on comprend aisément qu'il faille limiter au minimum les pertes de paquets pour assurer une bonne reconstitution du signal vocal fourni au terminal T2.

Afin de compenser l'effet des fluctuations du délai de transmission des paquets, on a choisi ici d'imposer aux paquets, après chaque pause longue, un délai de rétention «R» avant de commencer le décodage du signal vocal dans le VTU. Plusieurs solutions peuvent être envisagées pour fixer la valeur du délai de rétention. Toutes ces solutions doivent assurer autant que possible que R > dmax, dmax étant déterminé en fonction de la fluctuation maximum envisageable pour le délai de transit des données entre T1 et T2. La valeur R peut être par exemple déterminée en fonction du trafic ou en fonction du trajet. Lorsque le nombre de nœuds de transit entre les GNE, affectés à une même liaison, est variable, le délai de rétention «R» doit être fixé en fonction du nombre de nœuds à traverser et de leurs caractéristiques (i.e. notamment longueurs maximales des files d'attente). On a choisi pour l'exemple décrit ici de fixer R de manière prédéterminée et valable pour tous les équipements terminaux (VTE) du réseau. L'architecte du réseau calcule donc la valeur de dmax pour le cas le plus défavorable, c'est-à-dire pour le trajet VTE/VTE le plus long possible et en cas de trafic maximum et il fixe la valeur de R à utiliser. En effet, bien que le trajet VTE à VTE comporte des files d'attente, en pratique, la longueur maximale de chacune desdites files est définie. Donc le délai d'attente maximum dans les files du trajet le plus long peut être évalué par l'architecte d'un réseau donné.

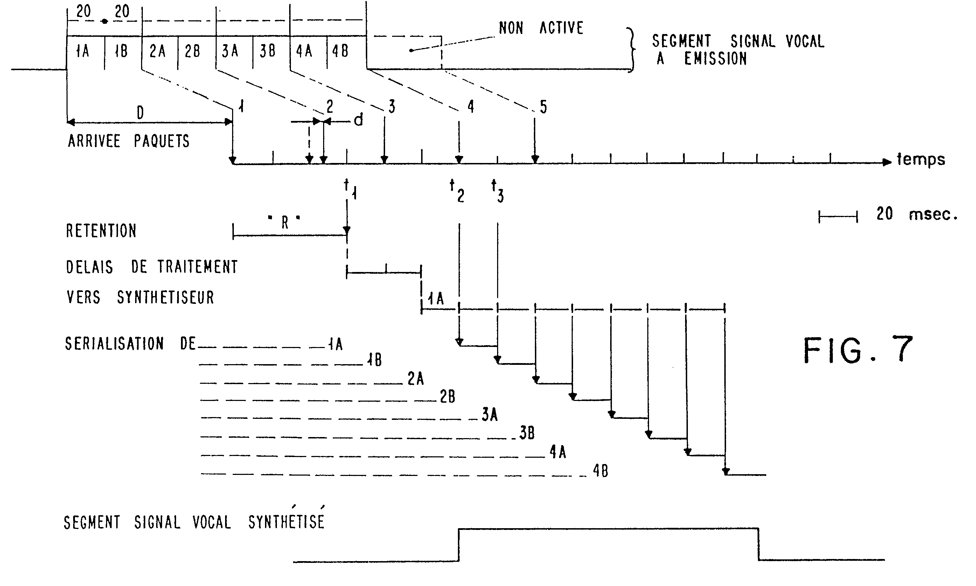

La figure 7 illustre le déroulement dans le temps, des opérations décrites plus haut. Cette figure reprend et complète les informations données sur la figure 3. On retrouve à l'émission le même segment de signal vocal. Mais on y a rajouté deux tronçons de 20 ms situés après la fin du segment, donc en début de zone d'inactivité décelée par le détecteur d'activité. Ceci permet d'expliquer la présence du cinquième paquet transmis (voir figure 3) alors que le segment de signal vocal considéré ne devrait fournir que quatre paquets.

Les paquets numérotés 1 à 5 arrivent dans l'unité de contrôle 20 avec le retard «D» auquel s'ajoute éventuellement «d». Ils ne seront fournis au synthétisseur du VTU affecté à T2 qu'après un délai de rétention «R». Dans l'exemple considéré, le délai de rétention R a été fixé à 80 ms. Donc, pour un premier segment de signal, les bits de données des blocs 1A et 1B ne sont soumis au décodeur du VTU récepteur associé à T2 que 60 ms après leur réception dans le VTU. A ce retard viennent éventuellement s'ajouter des délais de traitement des paquets reçus, délais concernant notamment le traitement au sein de l'unité de contrôle 20. Puis commencent les sérialisations des bits de données des tronçons 1A, 1B, etc... vers le synthétisseur 22. Le décodage et la synthèse du signal vocal en 22 commencent réellement à l'instant t2, soit à la fin de la réception par le synthétisseur 22 du bloc de 18 octets de données représentant le tronçon de signal 1A.

On a vu à propos de la figure 5, que l'unité terminale de voix (VTU)10, 12, codait systématiquement le signal provenant du combiné téléphonique T1 et fournissait à l'unité de contrôle 14, outre 18 octets de données pour 20 ms de signal fourni par T1, des informations dites de communication (COZ). L'unité de contrôle 14 utilise les informations COZ pour définir les valeurs à donner aux bits BOT et EOT du paquet en cours de traitement et prendre la décision de transmettre ou non vers l'équipement de nœud d'entrée, le paquet en cours de traitement. Cette décision dépend aussi de la décision du même type prise par l'unité de contrôle 14 à propos du (des) tronçon(s) de 20 ms traité(s) précédemment. Les décisions sont prises conformément au tableau I suivant:

Tableau I

| VAD | | | Etat | | Envoi | | Signification |
|---|---|---|---|---|---|---|---|
| Tronçon A | Tronçon B | Tronçon précédent | Précédent | Décision | EOT Bit | BOT Bit | |
| VAD = 0 | VAD = 0 | VAD = 0 | Non | Non | | | Silence |
| VAD = 0 | VAD = 1 | VAD = 0 | Non | Oui | 1 | 0 | Début de segment |
| VAD = 0 | VAD = 1 | VAD = 1 | Non | Non | | | * |
| VAD = 1 | VAD = 0 | VAD = 1 | Non | Non | | | * |
| VAD = 1 | VAD = 1 | VAD = 1 | Non | Non | | | * |
| VAD = 1 | VAD = 0 | VAD = 0 | Non | Non | | | Segment un seul tronçon |
| VAD = 1 | VAD = 1 | VAD = 0 | Non | Oui | 1 | 0 | Début de segment |
| VAD = 0 | VAD = 0 | VAD = 1 | Non | Non | | | * |
| VAD = 0 | VAD = 0 | VAD = 0 | Oui | Non | | | Début silence |
| VAD = 0 | VAD = 1 | VAD = 0 | Oui | Oui | 1 | 0 | Début segment |
| VAD = 0 | VAD = 1 | VAD = 1 | Oui | Oui | 1 | 1 | Milieu segment |
| VAD = 1 | VAD = 0 | VAD = 1 | Oui | Oui | 0 | 1 | Fin segment |
| VAD = 1 | VAD = 0 | VAD = 0 | Oui | Non | | | Segment 1 tronçon |
| VAD = 1 | VAD = 1 | VAD = 1 | Oui | Oui | 1 | 1 | Milieu segment |
| VAD = 1 | VAD = 1 | VAD = 0 | Oui | Oui | 1 | 0 | Début segment |
| VAD = 0 | VAD = 0 | VAD = 1 | Oui | Oui | 0 | 1 | Fin segment |

*Cas impossible.

Nota: (1) BOT ou EOT = 0 pour signifier que c'est un début ou une fin de segment de signal vocal.

2) La dernière ligne du tableau confirme ce qui a été mentionné plus haut, à savoir, qu'un paquet supplémentaire doit parfois être conçu pour transmettre l'information «fin de segment» bien que le détecteur d'activité indique une inactivité vocale.

3) Lorsqu'un tronçon d'activité est détecté entre deux tronçons d'inactivité, on suppose qu'il s'agit d'un bruit et le paquet dans lequel le tronçon «actif» devrait être inclus n'est pas envoyé à la sortie de l'équipement terminal de voix (VTE) dans lequel ce paquet a été conçu.

Donc, l'unité de contrôle 14 utilise les informations logiques du tableau I pour grouper deux tronçons de 20 ms de signal au sein d'un même paquet et construire le paquet en donnant notamment une valeur aux bits BOT et EOT.

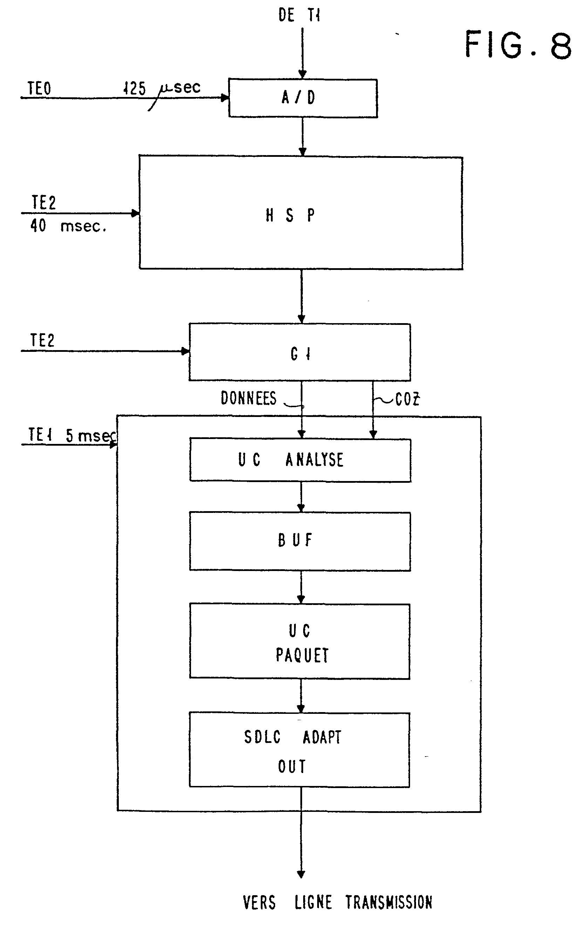

La figure 8 schématise le déroulement des opérations d'émission au sein de l'équipement terminal de voix (VTE) auquel est rattaché le téléphone T1. Toutes les 125 µs (aux instants TE0), le signal issu de T1 (qu'il s'agisse de voix, bruit ambiant ou silence) est échantillonné et codé en numérique à 12 bits PCM (opération A/D). Ces échantillons sont fournis séquentiellement au codeur/compresseur (HSP)12, dont les fonctions sont en fait réalisées par un microprocesseur. Ce microprocesseur traite les échantillons qu'il reçoit par blocs représentant des tronçons successifs de 20 ms de signal codé à 12 bits de manière à améliorer les qualités du codage ou à comprimer l'information codée en appliquant notamment les techniques décrites dans le brevet européen EP-A 0 002 998. Les informations traitées par le microprocesseur sont transmises toutes les 40 ms, aux instants TE2, à l'unité de contrôle (UC)14. On a schématisé ce transfert par un passage à travers une porte G1. A noter qu'on a aussi schématisé la séparation des données et des informations de communication (COZ). Si l'on suppose qu'au sein d'un même équipement terminal de voix (VTE), huit unités terminales de voix (VTU) sont commandées par une même unité de contrôle (UC)14, le balayage des unités terminales VTU doit se faire à une cadence de 5 ms, de manière à repasser sur une même unité terminale (VTU) toutes les 40 ms. Toutes les 40 ms, le microprocesseur 12 réalisant entre autres, les fonctions de codage/compression citées plus haut, fournit en plus des bits du signal codé, les données dites d'activité vocale ou VAD servant à définir les bits EOT et BOT. L'unité de contrôle (UC)14 après avoir analysé ce qu'elle reçoit du microprocesseur HSP, met les blocs de 2 × 18 octets de données en mémoire tampon (BUF) et effectue les opérations conduisant à la construction d'un paquet de bits. C'est-à-dire, essentiellement, commence à construire l'en-tête H2. Pour cela, les bits EOT et BOT sont calculés. En outre, le bit du champ P (voir figure 4) dit bit de parité, est changé ou non selon que l'on traite un paquet qui suit ou non un silence long. On notera qu'au départ d'une communication, le bit P est systématiquement forcé à zéro. (A noter qu'au récepteur, c'est-à-dire dans l'équipement terminal de voix (VTE) contenant l'unité de contrôle (UC)20 desservant le terminal téléphonique T2, le contenu d'une position de mémoire chargée de recevoir le bit de parité P est initialement mis à 1 de manière à pouvoir identifier la réception du tout premier segment de voix d'une communication par comparaison entre le bit P reçu et le contenu de ladite position de mémoire). D'autre part, l'unité de contrôle UC 14 détermine le contenu du champ de numéro de séquence de paquet (PS). Le contenu de ce champ est systématiquement remis à zéro après un silence long, c'est-à-dire à toute modification du bit de parité P. La valeur du numéro de séquence de paquet est augmentée d'une unité toutes les 40 ms, qu'un paquet soit transmis ou pas. On rappellera ici que, compte tenu de la limitation du champ PS à cinq positions de bits, le comptage de paquet est, dans l'exemple décrit effectué modulo 32. Ceci permet d'assurer la fidélité dans la mesure des pauses courtes ($\leq$ 1,28 seconde), ce qui, en pratique est l'un des buts à atteindre.

A chaque premier paquet d'un segment de signal vocal, le bit BOT est mis à zéro de manière à signaler un début de segment et à permettre de détecter à la réception, la perte d'un premier paquet.

Puis vient la fonction SDLC ADAPT OUT qui réalise des opérations classiques de mise des données en format de type SDLC en remplissant notamment les champs F, A, C et BCC et en ajoutant éventuellement au message, des bits dits de bourrage (stuffing ou zero insertion) permettant une transmission transparente. Une fois ces opérations réalisées, l'adaptateur SDLC transmet le paquet ainsi construit sur la ligne de transmission, c'est-à-dire, vers le nœud d'entrée de réseau (GNE)16, en passant éventuellement par un modem du genre modem IBM 3865.

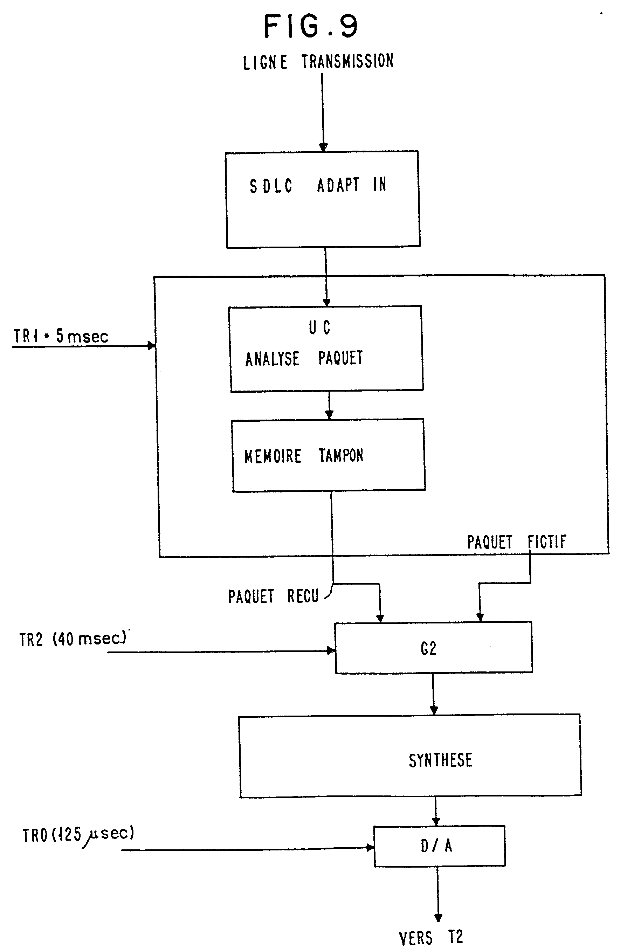

La figure 9 montre le déroulement des opérations coté réception, c'est-à-dire, après l'équipement de nœud de sortie (GNE)18. On notera qu'à la réception comme à l'émmission d'une unité de contrôle (UC)20 est utilisée pour gérer huit unités terminales de voix (VTU), donc huit dispositifs de décodage et décompression (HSP)22, bien que la description ne soit faite que pour un seul VTU. Une fois le signal démodulé par un modem (non représenté), l'unité de contrôle (UC)20 dispose de paquets de bits ayant le format représenté sur la figure 4. Ces paquets sont stockés dans un adaptateur SDLC ADAPT IN au fur et à mesure qu'ils arrivent. Ils sont ensuite analysés et éventuellement introduits dans une mémoire tampon avant d'être traités comme on le verra plus loin.

Pour l'instant, on retiendra que le bloc de caractères BCC du paquet reçu est analysé pour vérifier la validité des données. Si le résultat de cette vérification est négatif, le paquet concerné est rejeté. L'unité de contrôle (UC)20 peut noter éventuellement ce rejet pour faciliter les opérations de reconstruction de paquets de bits perdus.

Si le résultat de la vérification de validité des données reçues est positif, l'unité de contrôle

(UC)20 procède à l'analyse des en-têtes H1 et H2 et en déduit les opérations à effectuer.

L'analyse de H1 fournit la valeur du numéro de canal logique (LCN) servant à identifier l'unité terminale de voix destinataire du paquet en cours de traitement et donc une file d'attente destinataire.

L'analyse porte ensuite sur l'en-tête H2, à commencer par le bit de parité P. Ce bit permet de déceler à la réception, le passage d'une séquence de segments de signal vocal à une autre, même si quelques paquets ont été perdus en cours de transmission. Il peut servir aussi, si besoin était, à resynchroniser les horloges (non représentées) que les équipements terminaux (VTE) d'émission et réception doivent contenir. Mais en pratique, émission et réception peuvent aussi bien être assynchromes l'une par rapport à l'autre.

L'analyse de l'unité de contrôle (UC)20 porte ensuite sur les contenus des champs BOT et EOT. Par cette analyse l'unité 20 définit l'information de communication COZ (non représentée sur la figure 9) à transmettre au décodeur/synthétiseur (HSP)22. Cette information permet au dispositif 22 de déterminer la façon dont les 2 blocs de 18 octets à recevoir doivent y être traités. L'interprétation des champs BOT et EOT se fait selon la logique définie dans le tableau II.

Tableau II

| BOT | EOT | Etat précédent | Type de paquet à envoyer à synthèse | Signification pour l'unité de contrôle 20 |
|---|---|---|---|---|
| 0 | 0 | Silence | Reçu | Segment comportant un seul tronçon de 20 ms de signal |
| 0 | 1 | Silence | Reçu | deux tronçons de 20 ms représentant un début de segment de signal vocal |
| 1 | 1 | Voix | Reçu | Deux tronçons de 20 ms représentant un milieu de segment de signal vocal |
| 1 | 0 | Voix | Reçu | Deux tronçons de 20 ms représentant une fin de segment de signal vocal |
| 0 | 0 | Voix | Reçu | Tronçon unique de 20 ms représentant une fin de segment de signal vocal |
| | | Silence | Fictif | Synthétiser un silence |
| | | Paquet manquant | Fictif | Extrapoler ou interpoler |

Enfin, l'analyse de l'unité de contrôle (UC)20 porte sur le champ PS du paquet reçu. Cette analyse du contenu du champ PS permet de détecter les pertes ou rejets de paquets par le réseau. Elle sert aussi à la reconstruction, de manière relativement précise, des pauses courtes.

Les paquets de bits reçus sont, après analyse, placés dans la mémoire tampon de l'unité terminale de voix destinataire du paquet en cours de traitement. Cette mémoire sert à la réalisation de la file d'attente associée à l'unité terminale de voix (VTU). Toutes les 40 ms (aux instants TR2), tout se passe comme si une porte G2 s'ouvrait pour laisser passer vers le décodeur synthétiseur, soit un paquet de voix dit paquet reçu, soit un paquet fictif. Lorsqu'il reçoit un paquet «reçu», le synthétiseur l'utilise pour décoder et reconstruire le signal vocal. Lorsqu'il reçoit un paquet fictif (préemmagasiné dans l'unité de contrôle), le synthétiseur soit synthétise un bruit servant à colorer un silence, soit reconstruit un paquet de voix perdu par extrapolation ou interpolation de paquets adjacents au paquet perdu avant de procéder au décodage du paquet ainsi reconstruit.

Puis viennent des opérations dite de décompression et synthèse du signal, opérations réalisées par le dispositif HSP 22. Enfin, un convertisseur numérique/analogique (D/A) 24 effectue une conversion de BCPCM en PCM à 12 bits à la cadence de 8000 échantillons par seconde, puis transforme le signal codé en PCM en un signal analogique qui est délivré au téléphone destinataire T2.

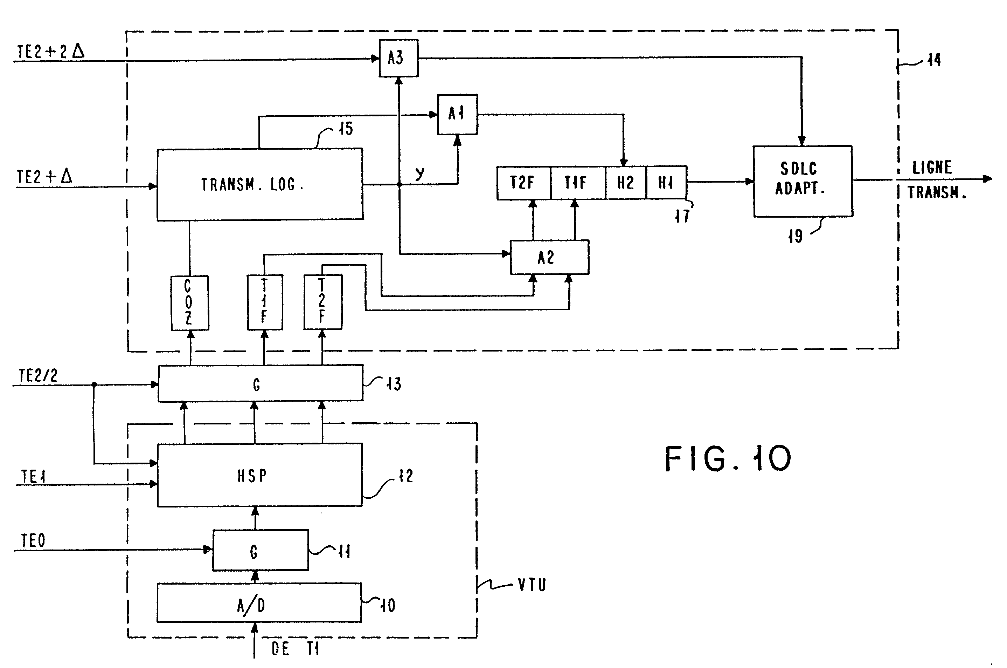

La figure 10 est un schéma bloc de la partie émission d'un équipement terminal (VTE) montrant les élements réalisant les opérations décrites plus haut. On notera tout d'abord, la présence des trois types d'impulsions de chronologie des opérations d'émission, à savoir TE0, TE1 et TE2 utilisées sur la figure 8. Ces impulsions sont fournies par des horloges (non représentées) et ayant respectivement pour période 125 μs, 5 ms et 40 ms.

Le signal fourni par le téléphone T1 est converti en numérique (PCM à 12 bits échantillonné 8 kHz) dans le convertisseur 10. Les échantillons ainsi codés sont introduits dans le dispositif compresseur (HSP)12 à travers une porte (G)11 ouverte au rythme de TE0. Le dispositif 12 effectue les opérations de codage en sous-bandes telles que décrites dans le brevet européen, EP-A 0 002 998 cité plus haut. Autrement dit, le dispositif 12 re- code le signal vocal selon des techniques dites BCPCM, traitant l'information reçue par blocs d'échantillons représentant chacun 20 ms de signal vocal d'origine. En fait, comme on l'a vu plus haut, le dispositif de l'invention a été conçu pour grouper deux blocs consécutifs de 20 ms chacun. Le codeur 12 fournit donc toutes les 20 ms, soit aux instants TE2/2, et à travers une porte 13, un bloc de bits à insérer dans le paquet à transmettre. On a prévu deux registres tampons T1F et T2F de 18 octets chacun, pour recevoir les deux blocs de données à transmettre. De même, un registre portant la référence COZ est prévu pour recevoir les informations de communication signalées plus haut. On notera en outre que le dispositif compresseur est aussi synchronisé sur l'horloge TE1 ayant un cycle de 5ms. Ceci permet de synchroniser le fonctionnement des dispositifs compresseurs de voix des huit unités terminales de voix (VTU) rattachées à une même unité de contrôle (UC)14 au sein d'un m'ême équipement terminal de voix (VTE).

L'information contenue dans le registre COZ sert à commander les opérations logiques d'émission à l'aide d'un dispositif logique de transmission (TRANSM.LOG)15 qui construit l'en-tête H2 et la place dans un registre 17 à travers une porte A1. De même, les 36 octets T1F et T2F sont aussi placés dans le registre 17 à travers une porte A2. Les ouvertures des portes A1 et A2 sont commandées par le dispositif logique 15. On a désigné par TE2 + $\Delta$ l'information fixant la chronologie des opérations du dispositif logique 15. Le +$\Delta$ indique que le signal de chronologie considéré est retardé de 5 ms par rapport à celui de l'horloge d'émission fournissant le signal TE2.

Le registre 17 possède aussi une position pour l'en-tête H1 qui, dans le cas présent est fixé et chargé à l'initialisation du réseau de commutation de paquets de voix (VPSN).

Le contenu du registre 17 est transféré dans un adaptateur (SDLC ADPT) 19 commandé, à travers une porte A3, par le signal de l'horloge TE2 décalé de $2 \times 5$ ms = 10 ms. L'adaptateur 19 finit de construire le paquet à transmettre en introduisant les éléments qui y manquent, à savoir: les caractères F, A, C, BCC et les bits de bourrage. Les ouvertures des portes A1, A2 et A3 sont conditionnées par la mise au niveau logique un d'un signal «Y» fourni par le dispositif logique de transmission 15 pour indiquer que le paquet en cours de fabrication est bien à transmettre.

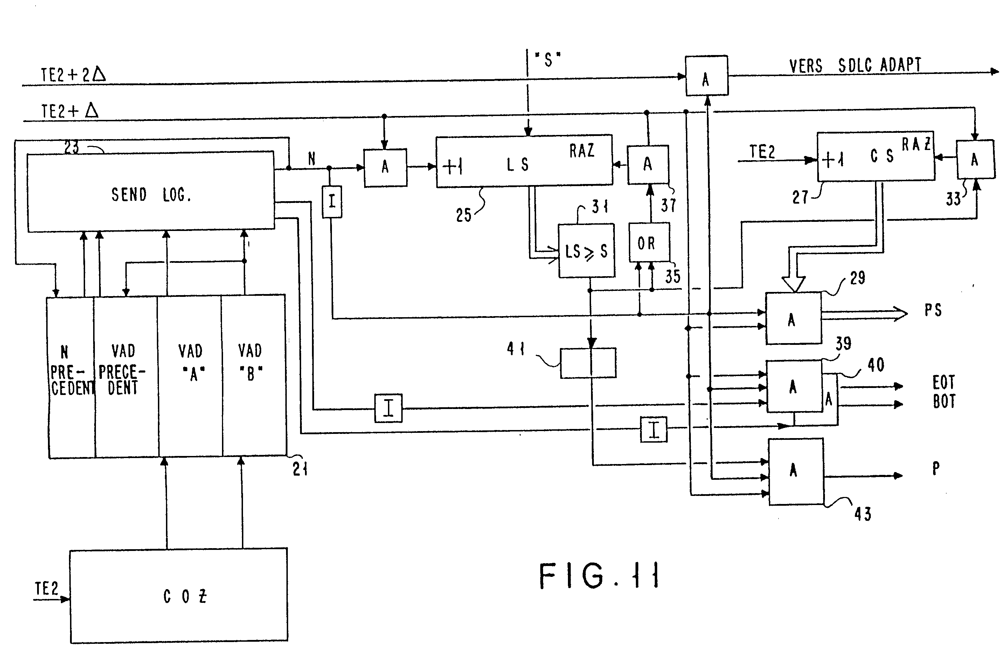

On a représenté sur la figure 11 un mode de réalisation du dispositif logique 15. Ce dispositif réalise, entre autres, les opérations résumées sur le tableau I. Pour cela, les état logiques des détecteurs d'activités (VAD) signalés dans les informations de communication COZ sont mises en mémoire tampon 21. Cette mémoire conserve l'indication d'activité (VAD) correspondant à trois tronçons de signal vocal, à savoir les tronçons A et B en cours de traitement, et le dernier tronçon précédent, c'est-à-dire le tronçon B du paquet précédent. Ces indications d'activité sont envoyées à un circuit logique (SEND LOG)23 qui réalise les fonctions logiques du tableau I et notamment indique l'état d'envoi sur une ligne N, si le paquet en cours de traitement doit être envoyé. Un niveau logique «1» est appliqué à la ligne N pour traduire une indication négative (NON). Ce niveau logique est inversé en (I) pour traduire le «oui». Lorsque le niveau logique est à «1» sur la ligne N, aux instants définis par TE2 + $\Delta$, le contenu d'un compteur de pauses longues (LS)25 est augmenté d'une unité. Donc ce compteur mesure les silences. Un autre compteur (CS)27 est utilisé pour calculer la valeur à donner au champ PS d'un paquet de bits en cours de construction. Le compteur (CS)27 compte modulo 32 et son contenu est augmenté d'une unité toutes les 40 ms, qu'un paquet soit transmis ou pas. Lorsqu'une décision de transmettre un paquet est prise par le dispositif logique 23, et aux instants définis par TE2 + $\Delta$, le contenu du compteur 27 est envoyé à travers une porte (A)29 vers la position PS du champ H2 du registre 17 (voir figure 9). Le contenu du compteur 25 est comparé à un seuil S = 32. Lorsque ce seuil est atteint, un comparateur 31 délivre un niveau logique 1 qui remet le compteur 27 à zéro. Cette remise à zéro se fait à travers une porte (A)33 aux instants définis par TE2 + $\Delta$.

Lorsque la sortie du comparateur 31 ou la sortie N inversée du dispositif logique 23 passe à «1», le compteur 25 est remis à zéro aux instants TE2 + $\Delta$. Ces dernières opérations sont effectuées à l'aide d'un circuit logique OU (OR)35 et d'une porte logique (A)37.

Les valeurs logiques des champs EOT et BOT de l'en-tête H2 du paquet de bits en cours de construction sont fournis par le dispositif logique 23 conformément aux règles énoncées sur le tableau I. Ces niveaux sont transmis au champ H2 du registre 17 à travers des portes 39 et 40 ouvertes aux instants TE2 + $\Delta$ et uniquement lorsqu'un paquet est à transmettre. Comme on l'a indiqué à propos du tableau I, le niveau logique zéro a été choisi pour indiquer un début ou une fin de segment de signal vocal. D'où la nécessité d'inverseurs (I) sur les entrées et sorties des portes 39 et 40.

Enfin, une bascule bi-stable 41 est utilisée pour préparer le contenu du champ P. Le contenu de cette bascule est forcé à l'état zéro au démarrage d'une liaison téléphonique. Il est ensuite modifié chaque fois que la sortie du comparateur 31 passe au niveau logique «1» indiquant la fin d'une pause longue. Le contenu de la bascule 41 est transmis au champ P du registre 17 à travers une porte (A)43 aux instants TE2 + $\Delta$ et lorsqu'un paquet est à transmettre.

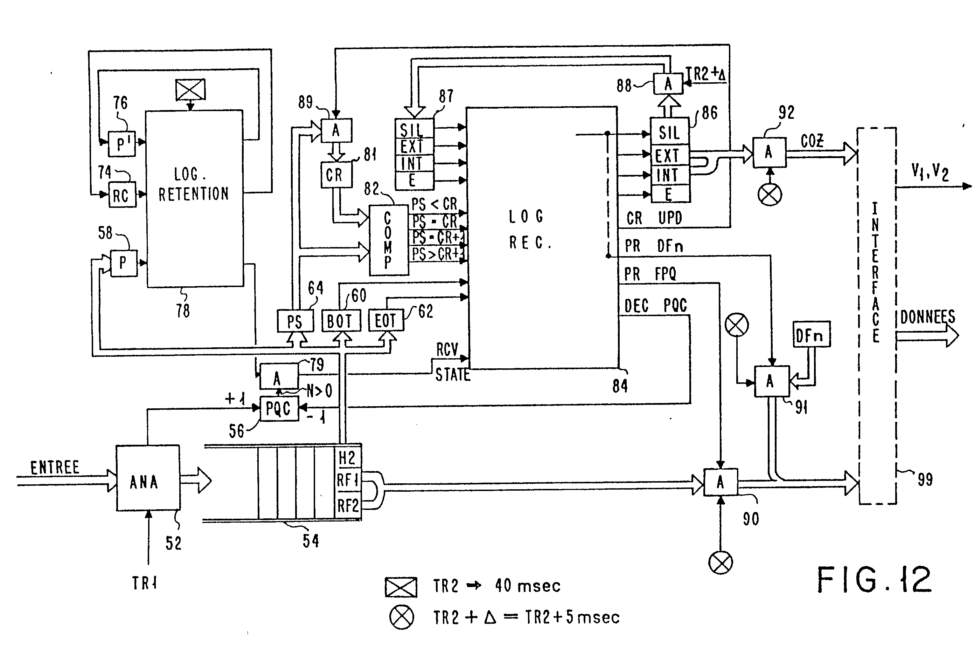

La figure 12 représente le schéma de principe d'un mode de réalisation du récepteur associé au terminal téléphonique T2. Cette figure représente donc la partie réception (modem éventuel non compris) de l'équipement terminal de voix (VTE) auquel est rattaché l'unité terminale de voix (VTU) desservant T2. Les éléments représentés sur la figure 12 appartiennent à l'unité de contrôle (UC)20 (fig. 5) et réalisent notamment les fonctions représentées entre SDLC ADAPT et SYN-THESE sur la figure 9.

La ligne venant de l'équipement de nœud d'entrée 18 est passée tout d'abord par un circuit 50 dit adaptateur SDLC (SDLC ADAPT) de la figure 9 non représenté sur la figure 12. La validité de chaque paquet reçu a été vérifiée à l'aide des deux octets BCC. Si le paquet comporte des erreurs, il est rejeté; sinon, il est débarrassé des informations telles que F, A, C, BCC et bits de bourrage. Il reste pour chaque paquet, les en-têtes H1 et H2 et 36 octets de données vocales. Ces 36 octets comprennent deux blocs de bits R1F et R2F de 18 octets représentant chacun un tronçon de voix de 20 ms. R1F et R2F correspondent aux blocs T1F et T2F transmis, éventuellement altérés en cours de transmission.

Les blocs R1F et R2F et les en-têtes H1 et H2 non rejetés par SDLC ADAPT sont envoyés à l'entrée du dispositif représenté sur la figure 12.

Un dispositif logique (ANA)52 est prévu pour analyser les informations contenues dans l'en-tête H1. L'analyse de l'en-tête H1 permet, après consultation de la TABLE I → VTUid (voir figure 6) d'identifier l'unité terminale de voix (VTU) destinataire. Ceci étant fait, l'en-tête H1 est supprimé et les éléments H2, R1F et R2F sont envoyés dans un registre tampon 54 où se trouve la file d'attente dudit VTU destinataire.

L'unité logique 52 d'un même équipement terminal (VTE) gère huit unités terminales (VTU). Le dispositif logique 52 est donc commandé notamment par une horloge de réception TR1 (non représentée) ayant un cycle de 5 ms. Chaque fois qu'un paquet (R1F, R2F, H2) est introduit dans la mémoire tampon 54, le contenu d'un compteur de paquets en queue (PQC)56 est augmenté d'une unité. Toutes les 40 ms, au rythme de l'horloge TR2 (non représentée), le contenu de l'entête H2 du paquet le plus proche de la sortie de la queue doit être analysé. Les bits P, BOT et EOT sont mis dans des cellules de mémoires 58, 60 et 62 respectivement. Les cinq bits du champ PS sont mis dans un registre 64. On a prévu en outre un compteur de rétention (RC)74 et une cellule de mémoire (P')76. Lors du traitement d'un paquet donné, la cellule de mémoire (P')76 est destinée à contenir la valeur du bit de parité P associée au traitement du paquet précédent. Quant au compteur de rétention, on verra de manière plus précise, son rôle. Les informations contenues dans les dispositifs (P')76, (RC)74 et (P)58 sont appliquées à l'entrée d'un dispositif logique de rétention (Log. Retention)78. Le dispositif logique de rétention délivre trois informations, a savoir:

– une valeur à attribuer au bit de parité P' ;
– une valeur à introduire dans le compteur de rétention RC;
– le niveau logique auquel une ligne dite ligne d'état de présentation (ou PRES. STATE) doit être portée.

La sortie PRES. STATE du dispositif logique de rétention 78 est appliquée à une porte (A)79 dont on verra la fonction ultérieurement.

Le dispositif logique de rétention (17) réalise les opérations logiques du tableau III.

Tableau III

| Entrée | | | Sortie | | | |
|--------|------|------|-------------|-----------|-----|----------------------------------|
| P | P'RC | | Pres. State | RC | P' | Commentaires |
| 0 | 0 | 0 | 1 | 0 | P' | |
| 0 | 0 ≠ | 0 | 0 | RC = RC–1 | P' | |
| 1 | 1 | 0 | 1 | 0 | P' | |
| 1 | 1 ≠ | 0 | 0 | RC = RC–1 | P' | |
| 0 | 1 | 0 | 0 | R | P | |
| 0 | 1 ≠ | 0 | 0 | RC = RC–1 | P' | Condition d'erreur = cas anormal |
| 1 | 0 | 0 | 0 | R | P | |
| 1 | 0 ≠ | 0 | 0 | RC = RC–1 | P' | Condition d'erreur = cas anormal |

N.B.: (1) ≠ 0 signifie «différent de zéro»
(2) R = 2 pour le mode de réalisation décrit ici à titre d'exemple. Autrement dit, le délai de rétention choisi est égal à 2 × 40 = 80 ms.

Lorsque PRES. STATE = 1, le contenu du compteur de rétention a donc atteint zéro. Le processus d'analyse proprement dite des paquets reçus peut démarrer. Le contenu d'un compteur (CR)81 dit de réception est forcé à zéro.

Le contenu du registre (PS)64 et celui du compteur de réception 81 sont comparés dans (COMP)82. Ce comparateur 82 a quatre lignes de sortie. L'une d'entre elles seulement peut être portée au niveau logique du fait de la comparaison.

L'état logique des lignes de sortie du comparateur 82 obéit donc au tableau IV suivant:

### Tableau IV

| PS < CR | PS = CR | PS = CR + 1 | PS > CR + 1 |
|---------|---------|-------------|-------------|
| 1 | 0 | 0 | 0 |
| 0 | 1 | 0 | 0 |
| 0 | 0 | 1 | 0 |
| 0 | 0 | 0 | 1 |

Les lignes de sortie du comparateur 82 sont connectées à l'entrée d'un dispositif logique de réception (LOG. REC.)84. L'entrée du dispositif logique de réception (LOG. REC.)84 est aussi reliée aux sorties des cellules de mémoire 60 et 62 dans lesquelles sont emmagasinées les valeurs des bits BOT et EOT de l'en-tête H2 du paquet en cours d'analyse, autrement dit le paquet le plus proche de la sortie de la mémoire tampon 54. Le dispositif logique 84 utilise les informations EOT et BOT pour engendrer un bit dit «E» dit bit extrapolation/interpolation conformément au tableau V.

Les significations des quatre sorties logiques de 82 (COMP) sont les suivantes:

PS<CR: le paquet en cours d'analyse n'est pas en séquence (inversion) ou a subi un temps de transfert à travers le réseau supérieur au maximum prévu (D+d).

PS = CR: le paquet en cours d'analyse est elligible pour restitution (en phase avec l'horloge de réception CR).

PS = CR+1: le paquet qui précède celui en cours d'analyse est manquant.

PS>CR+1: plusieurs paquets précédant celui en cours d'analyse sont manquants.

### Tableau V

| BOT | EOT | E |
|-----|-----|---|
| 0 | 0 | 0 |
| 0 | 1 | 0 |
| 1 | 0 | 0 |
| 1 | 1 | 1 |

La porte (A)79 indique si le contenu du compteur de paquets en queue (PQC)56 est positif lorsque la ligne PRES. STATE du dispositif logique de rétention 78 est au niveau «un». On a vu que le contenu de ce compteur 56 était augmenté d'une unité chaque fois qu'un paquet était introduit dans la file d'attente de la mémoire tampon 54. Le contenu de ce compteur (PQC)56 est par ailleurs diminué d'une unité par une information qui lui est transmise du dispositif logique de réception (LOG. REC.)84 à travers une ligne DEC PQC.

La sortie de la porte (A)79 donne une information dite d'état de réception qui est transmise au dispositif logique de réception (LOG. REC.)84 par une ligne dite RCV STATE.

Lorsque l'état de cette ligne est au niveau logique zéro, le dispositif logique 84 prend les décisions suivantes:

– Le niveau logique d'une ligne dite de commande de présentation de paquet fictif, ligne dite PR DFn, est mis à un.
– Le niveau logique d'une ligne dite de silence ou SIL sortant du dispositif 84 est forcé à un.
– Les niveaux logiques de trois autres lignes de sortie dites respectivement d'extrapolation (EXT) d'interpolation (INT) et E, sont forcés à zéro.

Les niveaux logiques des lignes SIL, EXT, INT et E sont mis dans un registre tampon de sortie 86. A un instant défini par TR2+$\Delta$, soit donc 5 ms après l'instant défini par l'horloge TR2, le contenu du registre tampon 86 est transferré dans un registre tampon d'entrée 87 à travers une porte (A)88.

Les combinaisons valides des informations SIL, EXT, INT et E ainsi que les significations correspondantes pour le dispositif de synthèse du signal à fournir au destinataire T2, sont résumées sur le tableau VI.

### Tableau VI

| | SIL | EXT | INT | E | | Signification |
|------|-----|-----|-----|---|------|---------------|
| 1) | 0 | 0 | 0 | 0 | 1. | Synthétiser le paquet de voix fourni (sur l'interface 99 de la figure 12) |
| 2) | 0 | 0 | 0 | 1 | 2. | de la figure 12) |
| 3) | 0 | 1 | 0 | * | 3. | Reconstituer un paquet de voix par extrapolation à partir du paquet de voix précédent |
| 4) | 0 | 0 | 1 | 1 | 4. | Reconstituer un paquet de voix par interpolation entre le paquet précédent et le paquet fourni |
| 5) | 1 | 0 | 0 | 0 | 5. | Générer un silence |

N.B.: *signifie «peu importe que ce bit soit 1 ou 0».

Le dispositif logique de réception (LOG. REC.)84 possède d'autres sorties. L'une de ces sorties désignée par CR UPD sert en cas de situation anormale à commander la mise à jour du compteur de réception (CR)81 à travers une porte (A)89. Lorsque le niveau logique de CR UPD est à un, le contenu du compteur 81 est remplacé par la valeur de PS emmagasinée dans le registre 64. Une autre sortie du dispositif 84, désignée par PR FPQ commande l'ouverture d'une porte 90 placée à la sortie de la mémoire tampon 54 et par laquelle passe le paquet de la queue à envoyer vers le synthétiseur HSP.

La sortie PR DFn, mentionnée plus haut commande l'ouverture d'une porte 91 à travers laquelle les paquets dits fictifs (DFn) peuvent être envoyés vers le synthétiseur HSP.

Une autre porte (A)92 placée à la sortie du registre tampon 86 commande le transfert des données EXT, INT vers le synthétiseur HSP. Ces données font partie des informations dites de communication (COZ) mentionnées plus haut.

Le dispositif logique de réception (LOG. REC.)84 effectue en outre des opérations logiques qui dépendent des informations fournies par le comparateur 82 et obéissent aux relations des tableaux VII à X suivants:

### Tableau VII

$PS < CR$

| Entrée | | | | | Sortie | | | | | | |
|---|---|---|---|---|---|---|---|---|---|---|---|
| SIL | EXT | INT | E | RCV State | SIL | EXT | INT | CR UPD | PR FPQ | PR Dfn | DECR PQC |
| 1 | * | * | * | 1 | 0 | 0 | 0 | 1 | 1 | 0 | 1 |
| 0 | 0 | 0 | 0 | 1 | 1 | 0 | 0 | 0 | 0 | 1 | 1 |
| 0 | 1 | 0 | * | 1 | 1 | 0 | 0 | 0 | 0 | 1 | 1 |
| 0 | 0 | 0 | 1 | 1 | 0 | 1 | 0 | 0 | 0 | 0 | 1 |

### Tableau VIII

$PS = CR$

| Entrée | | | | | Sortie | | | | | | |
|---|---|---|---|---|---|---|---|---|---|---|---|
| SIL | EXT | INT | E | RCV State | SIL | EXT | INT | CR UPD | PR FPQ | PR Dfn | DECR PQC |
| 1 | * | * | * | 1 | 0 | 0 | 0 | 0 | 1 | 0 | 1 |
| 0 | * | * | * | 1 | 0 | 0 | 0 | 0 | 1 | 0 | 1 |

### Tableau IX

$PS = CR + 1$

| Entrée | | | | | | | Sortie | | | | | | |
|---|---|---|---|---|---|---|---|---|---|---|---|---|---|
| SIL | EXT | INT | E | BOT | EOT | RCV | SIL | EXT | INT | CR UPD | PR FPQ | PR Dfn | DECR PQC |
| 1 | * | * | * | * | * | 1 | 1 | 0 | 0 | 0 | 0 | 1 | 0 |
| 0 | * | * | 1 | 1 | 1 | 1 | 0 | 0 | 1 | 0 | 1 | 0 | 0 |
| 0 | * | * | 1 | 0 | 0 | 1 | 0 | 1 | 0 | 0 | 0 | 0 | 0 |
| 0 | * | * | 1 | 1 | 0 | 1 | 0 | 1 | 0 | 0 | 0 | 0 | 0 |
| 0 | * | * | 1 | 0 | 1 | 1 | 0 | 1 | 0 | 0 | 0 | 0 | 0 |
| 0 | * | * | 0 | * | * | 1 | 0 | 1 | 0 | 0 | 0 | 0 | 0 |
| 0 | 1 | 0 | * | * | * | 1 | 1 | 0 | 0 | 0 | 0 | 1 | 0 |

Tableau X

PS > CR + 1

| Entrée | | | | | Sortie | | | | | | |
|---|---|---|---|---|---|---|---|---|---|---|---|
| SIL | EXT | INT | E | RCV State | SIL | EXT | INT | CR UPD | PR FPQ | PR Dfn | DECR PQC |
| 1 | * | * | * | 1 | 1 | 0 | 0 | 0 | 0 | 1 | 0 |
| 0 | * | * | 0 | 1 | 1 | 0 | 0 | 0 | 0 | 1 | 0 |
| 0 | 0 | * | 1 | 1 | 0 | 1 | 0 | 0 | 0 | 0 | 0 |
| 0 | 1 | * | * | 1 | 1 | 0 | 0 | 0 | 0 | 1 | 0 |

Ceci étant, le principe de fonctionnement du récepteur de l'équipement terminal peut se résumer comme suit. Le dispositif logique 82 compare le contenu du compteur de réception CR au numéro de séquence PS du premier paquet de la queue. Si ces numéros coïncident (voir TABLEAU VIII), et si RCV STATE = 1, le paquet considéré est à fournir au synthétiseur 22 à travers la porte 90 aux instants TR2 + $\Delta$, c'est-à-dire, ceux définis par TR2 retardés de 5 ms. En même temps, comme la ligne DECR PQC = 1, le contenu du compteur 56 est diminué d'une unité. Ce qui précède est valable quel que soit l'état logique de la ligne SIL à l'entrée du dispositif logique 84. Par contre si PS ne coïncide pas avec le contenu de CR, le numéro de séquence du paquet considéré n'est en principe pas celui auquel on aurait pu s'attendre.

Le système est alors dans une situation correspondant en principe à des silences, ou à des pertes de paquets. Dans le premier cas, le dispositif logique fournit des paquets fictifs (DFn) au synthétiseur qui les utilise pour engendrer un tronçon de 20 ms de bruit de fond, dit bruit d'agrément, destiné à colorer un silence. Dans le second cas, des opérations de reconstitution de paquets perdus seront entreprises conformément aux indications données dans la demande de brevet EP-A 0 139 803. A noter que dans la demande de brevet précitée, la reconstitution d'un paquet perdu utilise tantôt des techniques dites d'extrapolation à partir du paquet reçu précédemment, tantôt des techniques dites d'interpolation basée sur les contenus de paquets qui précèdent et de paquets qui suivent, dans le temps, le paquet perdu. On a vu que dans le dispositif de la présente invention, un bit dit «E» était engendré en utilisant, notamment, les informations de champs EOT et BOT de l'en-tête H2. Comme on le verra plus loin, ce bit sert notamment à la prise de décision interpolation/extrapolation.

Lorsque PS = CR+1, il y a rupture de séquence. Dans ce cas, quatre possibilités ont été envisagées:

1. L'entrée SIL = 1 et RCV state = 1; un tronçon de 20 ms de silence est à synthétiser. Dans ce cas, les sorties SIL et PR DFn sont mises au niveau logique 1. La porte (A)91 est ouverte au passage d'un paquet dit fictif (DFn) vers le synthétiseur HSP. Ce paquet de bits est utilisé par le microprocesseur décodeur (non représenté) pour synthétiser le bruit d'agrément.

2.1 Les entrées E, BOT, EOT et RCV state sont à 1 tandis que l'entrée SIL = 1. Les sorties INT et PR FPQ sont mises à 1. Le paquet disponible, c'est-à-dire celui qui se trouve en tête de la file dans la mémoire 54, est celui normalement destiné à l'instant TR2 suivant. Il sera toutefois aussi utilisé durant le cycle TR2 en cours, pour permettre la reconstitution du paquet perdu par interpolation entre deux paquets situés de part et d'autre du paquet perdu. Pour réaliser cette opération, on peut, par exemple, utiliser les moyens décrits dans la demande de brevet EP-A 0 139 803 cité plus haut. On remarquera en outre que DECR PQC = 0 (voir tableau IX). Ceci signifie que le paquet utilisé n'est pas chassé de la file d'attente et que le contenu du compteur 56 n'est pas modifié.

2.2 Les entrées E et RCV state sont à 1 tandis que l'entrée SIL = 0 et BOT, EOT ne sont pas dans la confirmation 11. Le paquet disponible, c'est-à-dire celui qui se trouve en tête de la file dans la mémoire 54, est celui normalement destiné à l'instant TR2 suivant. Il sera toutefois aussi utilisé durant le cycle TR2 en cours, pour permettre la reconstitution du paquet perdu par extrapolation à partir du paquet précédent. La sortie EXT est mise à 1. Toutes les autres sont mises à zéro. Pour réaliser cette opération, on peut, par exemple, utiliser les moyens décrits dans la demande de brevet EP-A 0 139 803. On remarquera en outre que DECR PQC = 0 (voir tableau IX). Ceci signifie que le paquet utilisé n'est pas chassé de la file d'attente et que le contenu du compteur 56 n'est pas modifié.

3. Les entrées SIL = 0 et E = 0 tandis que l'entrée RCV state = 1. La sortie EXT est portée à 1. Dans ce cas, l'opération à exécuter pour reconstituer le paquet perdu est une opération d'extrapolation à partir du paquet précédemment transmis au synthétiseur. Aucun paquet n'est donc transmis au synthétiseur à travers les portes 90 et 91.

4. Les entrées SIL = 0, EXT = 1, INT = 0 et RCV state = 1. Les sorties SIL = 1 et PR DFn = 1, toutes les autres sorties du dispositif 84 sont mises à zéro. Dans ce cas, un tronçon de bruit est synthétisé à partir du paquet DFn transmis au synthétiseur à travers la porte 90.

Lorsque PS>CR+1, il y a là aussi rupture de séquence, mais la situation est plus critique qu'elle ne l'était dans le cas où PS = CR+1, car le nombre de paquets perdus est supérieur à un. Quatre cas ont été envisagés (voir TABLEAU IX):

1. Les entrées SIL = 1 et RCV state = 1. Le dispositif logique 84 engendre SIL = 1 et PR DFn = 1. Toutes les autres sorties du dispositif 84 sont portées à zéro. Un silence est à synthétiser et un paquet fictif DFn est transmis à travers la porte 91.

2. Les entrées SIL = 0; E = 0 et RCV state = 1. Les sorties SIL et PR DFn du dispositif logique 84 sont portées à un. Toutes les autres sorties du dispositif 84 sont mises à zéro. Comme ci-dessus, un silence est à synthétiser. Donc un paquet fictif DFn est transmis à travers la porte 91.

3. Les entrées SIL = 0; EXT = 0 tandis que E = 1 et RCV state = 1. Un paquet perdu est à synthétiser par extrapolation. Donc la sortie EXT du dispositif logique 84 est portée à 1 et toutes les autres sorties du dispositif 84 sont mises à zéro.

4. Les entrées EXT = 1 et RCV state = 1 tandis que SIL = 0. Les sorties SIL et PR DFn du dispositif logique 84 sont portées à 1 tandis que les autres sorties sont mises à zéro. Ceci signifie que le cycle de synthèse précèdent ayant comporté une opération d'extrapolation, un silence doit maintenant être synthétisé, donc un paquet fictif DFn est transmis à travers la porte 91.

Reste finalement la situation du TABLEAU VII où PS<CR qui est la plus critique. Quatre cas ont été envisagés ici.

1. Les entrées SIL = 1 et RCV state = 1. L'opération du cycle TR2 précédent concernait un silence. Le dispositif logique 84 force à 1 les sorties CR UPD; PR FPQ et DEC PQC. Les autres sorties du dispositif 84 sont mises à zéro. CR UPD = 1 force la mise à jour du compteur 81. Le champ PS stocké dans le registre 64 est transferré dans le compteur 81 à travers la porte 89. PR FPQ = 1 ouvre la porte 90 et le paquet en tête de la file dans la mémoire 54 est envoyé au synthétiseur. Comme DEC PQC = 1, le contenu du compteur 56 est diminué d'une unité.

2. A l'entrée du dispositif logique de réception 84, seul la ligne RCV state = 1, toutes les autres lignes sont à zéro. Les sorties SIL, PR DFn et DEC PQC sont à un, toutes les autres sorties sont à zéro. Un paquet de type DFn est transmis au synthétiseur pour que celui-ci engendre un tronçon de 40 ms de bruit représentant un silence. Mais on notera que, du fait que la sortie DEC PQC = 1, le contenu du compteur 56 est diminué d'une unité. Ceci permet de ramener progressivement le système à une situation plus normale.

3. Les lignes d'entrées EXT et RCV state sont à un tandis que SIL et INT sont à zéro. Les sorties SIL, PR DFn et DEC PQC sont mis à un. Les autres sorties du dispositif 84 sont mises à zéro. Tout se passe comme en (2) ci-dessus. Le contenu du compteur PQC est là encore diminué d'une unité.

4. Les lignes d'entrées RCV state et E sont à un. Les autres lignes d'entrées sont à zéro. En sortie du dispositif 84, les lignes EXT et DEC PQC sont mise à un, les autres sont mises à zéro. Le synthétiseur ne reçoit pas de paquet donc les portes 90 et 91 sont fermées. Une opération d'extrapolation sera effectuée à partir du paquet précédemment fourni au synthétiseur. Par contre, ici encore le contenu du compteur PQC est diminué d'une unité.

En résumé, on peut dire que lorsque les bits INT = 0 et EXT = 0 à la sortie de la porte 92, le dispositif de synthèse du signal décodera les paquets de bits sortant des portes 90 et 91 sans se préoccuper de savoir si ces paquets représentent vraiment un signal vocal ou s'ils représentent un silence. Dans ce cas, en supposant que le signal vocal ait été codé dans le VTU associé au terminal téléphonique TI à l'aide d'un codeur de type VEPC, le décodage du contenu des champs R1F et R2F des paquets reçus se fera dans le VTU de réception, à l'aide d'un synthétiseur HSP de type VEPC. Pour une description plus détaillée des codeur/décodeur utilisables en l'espèce, on peut se reporter, par exemple au brevet européen EP-A 0 002 998 cité plus haut.

Par contre, si l'un des bits EXT ou INT est égal à un, un paquet a été «perdu» et doit être reconstruit afin d'être soumis au décodeur synthétiseur. Plus précisément, si EXT = 1 et INT = 0, le synthétiseur devra reconstituer les informations perdues par extrapolation à partir des informations contenues dans le(s) paquet(s) précédemment reçu(s). Dans ce cas, les portes 90 et 91 resteront fermées. Dans le cas où EXT = 0 et INT = 1, les informations du paquet perdu seront à reconstruire par interpolations entre les données d'un (ou plusieurs) paquets précédent(s) et un (ou plusieurs) paquets suivants. Dans ce cas, l'une des portes 90 ou 91 sera ouverte pour laisser passer les informations d'un paquet de type DFn ou le paquet en tête de la queue 54 (mais sans le chasser de cette queue). Les informations R1F et R2F ou DFn sortant des portes 90 ou 91 seront à utiliser conjointement avec un (ou plusieurs) paquets précédents pour reconstituer le paquet perdu. Une fois les opérations de reconstitution de paquet effectuées par interpolation ou extrapolation, la synthèse du signal se fera comme pour un paquet reçu correctement. C'est-à-dire, en utilisant un synthétiseur décodeur de type VEPC par exemple.

On notera qu'un dispositif de reconstitution de paquets perdus par interpolation/extrapolation, à utiliser en combinaison avec un décodeur de type VEPC a été décrit dans la demande de brevet européen EP-A 0 139 803 cité plus haut. Pour parfaire la compatibilité du dispositif décrit ici (voir figure 12) avec celui de la figure 8 de ladite demande de brevet européen EP-A 0 139 803, on a rajouté ici un circuit d'interface 99. Ce circuit d'interface fournit d'une part des données et d'autre part deux signaux logiques ou bits de validité V1 et V2. Ces bits V1 et V2, qui joueront le rôle des bits de mêmes nom de la demande de brevet européen EP-A 0 139 803 seront engendrés dans le circuit d'interface 99 à partir des bits EXT et INT fournis ici par le registre 86 à travers la porte 92, c'est-à-dire, à partir des informations (COZ) dites de communication. Les valeurs des bits V1 et V2 obéissent aux relations du tableau XI.

Tableau XI

| EXT | INT | V1 | V2 | Commentaires |
|-----|-----|-----|-----|--------------|
| 0 | 0 | 1 | * | Synthétiser le signal à partir du paquet reçu en «données» |
| 1 | 0 | 0 | 0 | Extrapoler |
| 0 | 1 | 0 | 1 | Interpoler |

Les bits V1 et V2 permettront donc de commander les interrupteurs du dispositif décrit dans la demande de brevet citée plus haut.

Quant aux données sortant du circuit (INTERFACE)99, elles seront constituées par les bits des paquets sortant des portes 90 ou 91. Ces données seront à fournir directement au démultiplexeur (DMPX)"" du dispositif représenté sur la figure 8 de la demande de brevet européen EP-A 0 139 803.

## Revendications

1. Procédé de transmission de signaux fournis par des terminaux dit vocaux à travers un réseau de transmission numérique par paquets de bits, ledit procédé comprenant, à l'émission et pour chaque source en fonctionnement, les opérations suivantes:

- découpage du signal fourni par ladite source en tronçons de durée prédéterminée, lesdits tronçons étant codés numériquement;
- assemblage des bits résultant dudit codage en paquets, chaque paquet contenant les bits d'au moins un tronçon de signal fourni par ladite source et,
- détection dite d'activité chargée de détecter les tronçons correspondant à des pauses de ladite source, ladite détection d'activité servant à définir une condition de non transmission de paquets correspondant à des pauses;

ledit procédé étant caractérisé en ce que chaque paquet comprend au moins une entête (H2) contenant notamment un champ destiné à un numéro de séquence (PS) incrémenté au rythme des paquets assemblés, numéro de séquence dont la limite représente la valeur choisie pour définir la limite entre pauses dites courtes et pauses dites longues, ainsi qu'un bit (P) dit de parité dont la valeur est systématiquement modifiée à la fin d'une pause longue et entraîne la remise à zéro du numéro de séquence.

2. Procédé de transmission selon la revendication 1 caractérisé en outre en ce que, les débuts de transmission (BOT) et/ou fins de transmission (EOT) suivant ou précédant une pause sont traduits par des indications dans des champs de bits prédéterminés de ladite en-tête de paquet (H2).

3. Procédé de transmission selon l'une des revendications 1 ou 2 caractérisé en outre en ce que les paquets éventuellement fournis par un ou plusieurs ensemble(s) prédéterminé(s) de sources sont mis en queue dans un même nœud (GNE)

dudit réseau pour être transmis séquentiellement de manière synchrone à travers ledit réseau.

4. Procédé de transmission selon la revendication 3 caractérisé en ce que la condition de transmission ou non de paquets de pauses est définie en fonction de l'analyse des paquets par couples représentant le paquet en cours de traitement et un tronçon du paquet précédent.

5. Procédé de transmission numérique selon l'une des revendications 1 à 4 caractérisé en outre en ce qu'il comporte, à la réception et pour une communication entre un terminal T1 et son correspondant T2, les opérations suivantes:

- vérification de validité des paquets reçus pour le terminal T2 et mise en queue des paquets valides;
- analyse séquentielle des paquets reçus valides avant fourniture du contenu d'un paquet à un décodeur chargé de synthétiser le signal à fournir au terminal T2, ladite fourniture du contenu d'un paquet au décodeur étant retardée d'un intervalle de temps donné dit délai de rétention après chaque détection par ladite analyse, d'une pause dite longue.

6. Procédé de transmission selon la revendication 5 caractérisé en outre en ce que ladite analyse de paquet reçu détecte la fin d'une pause dite longue par détection d'un changement de valeur dudit bit de parité.

7. Procédé de transmission selon l'une des revendications 5 ou 6 caractérisé en outre en ce que les paquets invalides éliminés de ladite queue sont reconstitués à la réception par une méthode d'interpolation ou extrapolation de paquets, réalisée à partir du contenu de paquet(s) voisins du paquet invalide.

8. Procédé de transmission selon la revendication 7 caractérisé en outre en ce que durant les pauses, le décodeur reçoit des paquets dits fictifs servant à engendrer un bruit dit d'agrément.

9. Procédé de transmission selon la revendication 8 caractérisé en outre en ce que la valeur d'un bit dit d'erreur (E) est engendrée à la réception à partir des contenus des champs de bits qui dans ladite en-tête indiquent les début et fin de pauses, ledit bit d'erreur servant lui-même à la détermination du type de paquet, à savoir paquet de la queue ou paquet fictif, à fournir au décodeur.

10. Dispositif de transmission, à travers un réseau de transmission numérique par paquets contenant des nœuds d'entrée/sortie (GNE), de signaux fournis par des terminaux (T) dits vocaux, ledit dispositif comprenant des unités terminales (VTU) codant par tronçon le signal fourni par un terminal T; des moyens pour regrouper plusieurs VTU au sein d'un équipement terminal (VTE) chargé de former et gérer les paquets notamment en identifiant les pauses de chaque VTU rattaché et en affectant à chaque paquet formé, une en-tête (H2) comprenant notamment un champ PS destiné à contenir un numéro de paquet incrémenté jusqu'à une limite entre pause dite courte et pause dite longue, et un champ P destiné à un bit de parité modifié à la fin d'une pause longue et entraînant une remise à zéro du champ PS, ledit dispositif étant en outre caractérisé en ce que l'équipement terminal VTE destinataire de paquets comprend:

- des premiers moyens d'analyse (ANA) de validité de chaque paquet reçu;
- des moyens de mise en queue (54) reliés aux moyens d'analyse et mettant en queue VTE des paquets valides destinés à un même VTU;
- des seconds moyens d'analyse du contenu de ladite en-tête, reliés à la queue (54) et comprenant un dispositif logique de rétention (78) et des moyens pour bloquer, après chaque changement de valeur du bit P, la transmission du paquet en tête de queue de VTE durant un intervalle de temps donné dit délai de rétention.

11. Dispositif de transmission selon la revendication 10, caractérisé en ce qu'il comprend en outre:
- des moyens pour engendrer des paquets dits fictifs;
- des moyens logiques de réception (84) reliés à ladite queue de VTE (54) et au dispositif de rétention (78) et sensibles au contenu de l'en-tête H2 du paquet en cours de traitement et d'au moins un paquet précédant pour commander l'envoi vers un décodeur synthétiseur soit du paquet en cours de traitement, soit d'un paquet fictif.

12. Dispositif de transmission selon la revendication 11 caractérisé en outre en ce que ledit paquet fictif est utilisé par le synthétiseur pour engendrer un bruit dit d'agrément.

13. Dispositif de transmission selon la revendication 12 caractérisé en outre en ce qu'il comporte un compteur de réception (CR) dont le contenu est incrémenté d'une unité après chaque envoi d'un paquet vers le décodeur synthétiseur; et des moyens de comparaison comparant le contenu dudit compteur de réception avec le numéro de séquence (PS) du paquet en cours de traitement; lesdits moyens de comparaison fournissant une information auxdits moyens logiques de réception.

14. Dispositif de transmission selon la revendication 13 caractérisé en outre en ce que l'information fournie aux moyens logiques de réception par le comparateur se traduit par la mise au niveau logique ou d'une ligne indiquant la réalisation d'une des conditions logiques suivantes PS<CR, PS = CR, PS = CR+1, ou PS>CR+1.

15. Dispositif de transmission selon la revendication 14 caractérisé en outre en ce que l'indication PS = CR+1 est utilisée par les moyens logiques de réception (84) soit pour commander (91) l'envoi d'un paquet fictif, soit pour indiquer la perte d'un paquet à reconstituer.

16. Dispositif de transmission selon la revendication 15 caractérisé en outre en ce que l'indication PS<CR+1 signale une situation critique qui, notamment, forcera l'introduction de la valeur du numéro de séquence du paquet en cours de traitement, dans le compteur de réception.

**Patentansprüche**

1. Verfahren für die Übertragung von Zeichen, die von sogenannten Stimmterminals abgegeben werden, in Bitpaketen durch ein digitales Datennetz, wobei das Verfahren bei der Sendung und für jede Quelle in Betrieb folgende Vorgänge umfasst:

- Zerlegung des von der besagten Quelle abgegebenen Signals in Abschnitte vorgegebener Dauer, wobei die besagten Abschnitte digital codiert sind;
- Zusammenfassung der Bits aus besagter Codierung zu Paketen, von denen jedes die Bits von mindestens einem Signalabschnitt enthält, der von der besagten Quelle abgegeben wurde, und
- sogenannte Aktivitätserkennung, die die Abschnitte erkennen soll, welche Pausen der besagten Quelle entsprechen, wobei besagte Aktivitätserkennung dazu dient, einen Zustand zu definieren, in dem keine Pakete übertragen werden und der Pausen entspricht;

besagtes Verfahren dadurch gekennzeichnet, dass jedes Paket mindestens einen Kopfteil (H2) enthält, der insbesondere ein Feld für eine Sequenznummer (PS) enthält, die im Rhythmus der zusammengestellten Pakete inkrementiert wird, Sequenznummer deren Grenze den Wert darstellt, der gewählt wurde, um die Grenze zwischen den sogenannten kurzen Pausen und den sogenannten langen Pausen darstellt, sowie ein sogenanntes Paritätsbit (P), dessen Wert am Ende einer langen Pause systematisch geändert wird und das die Rückstellung der Sequenznummer auf Null bewirkt.

2. Übertragungsverfahren gemäss Anspruch 1, ferner dadurch gekennzeichnet, dass die Übertragungsbeginne (BOT) und/oder Übertragungsenden (EOT) nach oder vor einer Pause durch Angaben in vorgegebenen Bitfeldern des besagten Paketkopfes (H2) wiedergegeben werden.

3. Übertragungsverfahren gemäss einem der Ansprüche 1 oder 2, ferner dadurch gekennzeichnet, dass die Pakete, die eventuell von einer oder mehreren vorgegebenen Quellengruppen geliefert werden, in einem gleichen Knoten des besagten Netzes zu einer Warteschlange angeordnet werden, um sequentiell synchron durch besagtes Netz übertragen zu werden.

4. Übertragungsverfahren gemäss Anspruch 3, dadurch gekennzeichnet, dass der Übertragungs- oder Nichtübertragungszustand der Pausepakete anhand der Paketanalyse nach Paaren definiert wird, die das gerade verarbeitete Paket und einen Abschnitt des vorangehenden Pakets darstellen.

5. Digitales Übertragungsverfahren nach einem der Ansprüche 1 bis 4, ferner dadurch gekennzeichnet, dass es am Empfang und für eine Kommunikation zwischen einem Terminal T1 und seiner Entsprechung T2 folgende Vorgänge enthält:

- Überprüfung der Gültigkeit der empfangenen Pakete für das Terminal T2 und Einreihung der gültigen Pakete in die Warteschlange;
- sequentielle Analyse der empfangenen gültigen Pakete vor Abgabe des Inhalts eines Paketes an einen Decodierer, der das an das Terminal T2 abzugebende Signal zu synthetisieren hat, wobei besagte Abgabe des Inhalts eines Pakets an den Decodierer nach jeder Erkennung einer sogenannten langen Pause durch die besagte Analyse um ein Rückhalteverzögerung genanntes Zeitintervall verzögert wird.

6. Übertragungsverfahren gemäss Anspruch 5, ferner dadurch gekennzeichnet, dass besagte Analyse des empfangenen Pakets das Ende einer sogenannten langen Pause durch Erkennung einer Wertänderung des besagten Paritätsbits erkennt.

7. Übertragungsverfahren gemäss einem der Ansprüche 5 oder 6, ferner dadurch gekennzeichnet, dass die ungültigen Pakete, die aus der besagten Warteschlange ausgeschieden wurden, am Empfang durch eine Paketintra- oder -extrapolierung wieder nachgebildet werden, die anhand des Inhalts des oder der benachbarten Pakete des ungültigen Pakets vorgenommen wird.

8. Übertragungsverfahren gemäss Anspruch 7, ferner dadurch gekennzeichnet, dass der Decodierer in den Pausen sogenannte fiktive Pakete empfängt, die dazu dienen, ein sogenanntes Annehmlichkeitsgeräusch zu erzeugen.

9. Übertragungsverfahren gemäss Anspruch 8, ferner dadurch gekennzeichnet, dass der Wert eines sogenannten Fehlerbits (E) bei Empfang anhand der Inhalte der Bitfelder erzeugt wird, die im besagten Kopfteil die Anfänge und Enden der Pausen erzeugen, wobei besagtes Fehlerbit selbst zur Bestimmung des Pakettyps dient, d.h. Paket aus der Warteschlange oder fiktives Paket, das an den Decodierer weiterzugeben ist.

10. Vorrichtung für die Übertragung, durch ein digitales Übertragungsnetz, das Ein- und Ausgangsknoten (GNE) enthält, von Signalen, die von sogenannten Stimmterminals (T) abgegeben werden, wobei besagte Vorrichtung Terminaleinheiten (VTU) enthält, die das von einem Terminal T abgegebene Signal in Abschnitten codieren; und Mittel, um mehrere VTU in einer Terminalausrüstung (VTE) zusammenzufassen, die die Aufgabe hat, die Pakete zu bilden und zu verwalten, insbesondere durch Erkennung der Pausen einer jeden angeschlossenen VTU und durch Zuteilung eines Kopfes (H2) für jedes gebildete Paket, der insbesondere ein Feld PS enthält, das dafür bestimmt ist, eine Paketnummer zu enthalten, die inkrementiert wird, bis zu einer Grenze zwischen einer sogenannten kurzen Pause und einer sogenannten langen Pause, und ein Feld P, das für ein abgeändertes Paritätsbit am Ende einer langen Pause bestimmt ist und eine Rückstellung des Feldes PS auf Null bewirkt, wobei besagte Vorrichtung ausserdem dadurch gekennzeichnet ist, dass die VTE-Terminalausrüstung, für die die Pakete bestimmt sind, umfasst:

- erste Analysemittel (ANA) der Gültigkeit eines jeden empfangenen Pakets;
- Mittel für die Einreihung in die Warteschlange (54) mit einer logischen Rückhaltevorrichtung (78) und Mitteln, um nach jedere Wertänderung des Bits P die Übertragung des Pakets am Kopf der Warteschlange von VTE für ein Zeitintervall zu sperren, die sogenannte Rückhaltezeit.

11. Übertragungsvorrichtung gemäss Anspruch 10, dadurch gekennzeichnet, dass sie ferner enthält:

- Mittel für die Erzeugung sogenannter fiktiver Pakete;
- logische Empfangsmittel (84), die mit der sogenannten VTE-Schlange (54) und mit der Rückhaltevorrichtung (78) verbunden sind, und die auf den Inhalt des Kopfes H2 des gerade verarbeiteten Pakets und mindestens eines vorangehenden Pakets ansprechen, um die Aussendung entweder des gerade verarbeiteten Pakets oder eines fiktiven Pakets an einen Decodierer-Synthetisierer zu steuern.

12. Übertragungsvorrichtung gemäss Anspruch 11, ferner dadurch gekennzeichnet, dass das besagte fiktive Paket vom Synthetisierer verwendet wird, um ein sogenanntes Annehmlichkeitsgeräusch zu erzeugen.

13. Übertragungsvorrichtung gemäss Anspruch 12, ferner dadurch gekennzeichnet, dass sie einen Empfangszähler (CR) enthält, dessen Inhalt nach jeder Aussendung eines Pakets an den Decodierer-Synthetisierer um eine Einheit beaufschlagt wird; und Vergleichsmittel, mit denen der Inhalt des besagten Empfangszählers mit der Sequenznummer (PS) des gerade verarbeiteten Pakets verglichen wird; wobei besagte Vergleichsmittel eine Information an die besagten logischen Empfangsmittel abgeben.

14. Übertragungsvorrichtung gemäss Anspruch 13, ferner dadurch gekennzeichnet, dass sich die vom Vergleicher an die logischen Empfangsmittel abgegebene Information durch das Setzen eines logischen Zustandes oder einer Leitung niederschlägt, wodurch angegeben wird, dass eine der folgenden logischen Bedingungen erfüllt ist PS<CR, PS=CR+1, oder PS>CR+1.

15. Übertragungsvorrichtung gemäss Anspruch 14, ferner dadurch gekennzeichnet, dass die Angabe PS=CR+1 durch die logischen Empfangsmittel (84) verwendet wird, entweder um die Aussendung eines fiktiven Pakets (91) zu steuern oder um den Verlust eines nachzubildenden Pakets anzugeben.

16. Übertragungsvorrichtung gemäss Anspruch 15, ferner dadurch gekennzeichnet, dass die Angabe PS>CR+1 einen kritischen Zustand anzeigt, der insbesondere die Eingabe des Wertes der Sequenznummer des gerade verarbeiteten Pakets in den Empfangszähler bewirken wird.

**Claims**

1. A method of transmitting voice signals as packets of bits through a digital transmission network, said voice signals being generated by so-called voice terminals, said method including, at the transmitting end and for each active source, the steps of:

- dividing the signal provided by said source into digitally coded segments of predetermined duration;
- assembling the bits resulting from said coding in the form of packets, each packet containing bits from at least one segment of the signal from said source; and
- performing a so-called activity detection operation to detect segments corresponding to pauses of said source, said operation serving to define a condition in which packets corresponding to pauses are not transmitted;
said method being characterized in that each packet includes at least one header (H2) comprising in particular a field used for a sequence number (PS) that is incremented as the packets are assembled and whose upper limit represents a value selected to define the boundary between so-called short pauses and so-called long pauses, and a parity (P) bit whose value is systematically changed at the end of a long pause and causes the sequence number to be reset to zero.

2. A transmission method according to claim 1, further characterized in that the beginnings of transmissions (BOTs) and/or the ends of transmissions (EOTs) that follow or precede a pause are signaled by indications provided by bits present in predetermined fields of said packet header (H2).

3. A transmission method according to claim 1 or 2, further characterized in that the packets which may be supplied by one or more predetermined sets of sources are enqueued in the same node (GNE) of said network to be sequentially transmitted in a synchronous manner through said network.

4. A transmission method according to claim 3, characterized in that packets of pauses are or are not transmitted depending on the results of an analysis of couples of packets comprising the packet being processed and a segment of the preceding packet.

5. A digital transmission method according to any one of claims 1 to 4, further characterized in that it includes, at the receiving end and for the purposes of a communication between a terminal T1 and the terminal associated therewith T2, the steps of:

- checking the validity of packets received by terminal T2 and enqueuing the valid packets;
- performing a sequential analysis of said valid packets before applying the contents of a packet to a decoder used to synthesize the signal to be fed to terminal T2, said application of the contents of a packet to the decoder being delayed by a given time interval, called retention delay, subsequent to detection of a long pause through said analysis.

6. A transmission method according to claim 5, further characterized in that said received packet analysis is effective to detect the end of a long pause by detecting a change in the value of said parity bit.

7. A transmission method according to claim 5 or 6, further characterized in that invalid packets removed from said queue are reconstructed at the receiving end by means of a packet interpolation or extrapolation method that involves using the contents of one or more packets close to the invalid packet.

8. A transmission method according to claim 7, further characterized in that, during said pauses, the decoder receives dummy packets serving to generate so-called convenience noise.

9. A transmission method according to claim 8, further characterized in that the value of a so-called error (E) bit is generated at the receiving end from the contents of fields of bits signaling the beginnings and the ends of pauses, said error bit serving to determine the type of packet, i.e. whether it is an enqueued packet or a dummy one, to be fed to the decoder.

10. A transmission device for transmitting voice signals as packets through a digital transmission network that includes input/output nodes (GNEs), said signals being supplied by so-called voice terminals (Ts), said device comprising voice terminal units (VTUs) for coding successive segments of the signals supplied by a terminal T; means for grouping several VTUs within a voice terminal equipment (VTE) operable to form and manage the packets, in particular by identifying the pauses of each attached VTU and by assigning to each packet so formed a header (H2) that includes, in particular, a field PS containing a packet number incremented up to a value representing the boundary between so-called short pauses and so-called long pauses, and a field P containing a parity bit that is modified at the end of

a long pause and causes field PS to be reset to zero, said device being further characterized in that the VTE to which packets are sent includes:

- first analysis means (ANA) for analyzing the validity of each packet received;
- enqueuing means (54) connected to said analysis means for placing on the VTE queue valid packets intended for the same VTU;
- second analysis means for analyzing the contents of said header, said second means being connected to queue (54) and including a logic retention device (78) and means for holding up transmission, after every change in value of the P bit, of the leading packet on the VTE queue for a given time interval called retention delay.

11. A transmission device according to claim 10, characterized in that it further comprises:
- means for generating dummy packets;
- logic reception means (84) connected to said VTE queue (54) and to said retention device (78) and responsive to the contents of header H2 of the packet being processed and of the header of at least one preceding packet to cause either the packet being processed or a dummy packet to be sent to a decoder/synthesizer.

12. A transmission device according to claim 11, further characterized in that said dummy packet is used by the synthesizer to generate so-called convenience noise.

13. A transmission device according to claim 12, further characterized in that it includes a reception counter (CR) whose count is incremented by one whenever a packet is sent to the decoder/synthesizer; and comparison means for comparing the count of said reception counter with the sequence number (PS) of the packet being processed, said comparison means supplying said logic reception means with an information item.

14. A transmission device according to claim 13, further characterized in that the information item fed to the logic reception means by the comparator causes a line to rise to the «1» logic level indicating that one of the following logic conditions is satisfied: $PS<CR$, $PS=CR$, $PS=CR+1$ or $PS>CR+1$.

15. A transmission device according to claim 14, further characterized in that the indication $PS=CR+1$ is used by the logic reception means (84) either to cause (91) a dummy packet to be transmitted or to signal the loss of a packet to be reconstructed.

16. A transmission device according to claim 15, further characterized in that the indication $PS<CR+1$ signals a critical condition that will cause, in particular, the value of the sequence number of the packet being processed to be forced into the reception counter.

FIG.1

EP 0 162 173 B1

FIG.2

# FIG. 3

CODAGE

TRONCONS DE
VOIX DE
20 ms

ASSEMBLAGE
PAQUETS

1
1A, 1B

2
2A, 2B

3

PAQUET
DE 40 ms

4

5

PAQUET BOT

① ② ③ ④ ⑤ PAQUET EOT

PAQUETS VERS
RESEAU

TEMPS

25

| F | A | C | H1 | H2 | 18 + 18 | BCC | F |

| 0 | | | | | | | | 0 | 1 | 2 | 3 | 4 | 5 | 6 | 7 |

LCN

PS

BOT

EOT

P

FIG. 4

EP 0 162 173 B1

FIG. 5

FIG. 6

EP 0 162 173 B1

FIG. 7

FIG. 8

DE T1

TE0 — 125 µsec → A / D

TE2 40 msec. → H S P

TE2 → G 1

DONNEES — CO2

TE1 5 msec

U C ANALYSE

B U F

U C PAQUET

SDLC ADAPT OUT

VERS LIGNE TRANSMISSION

35

# FIG.9

LIGNE TRANSMISSION

```
          SDLC   ADAPT IN
```

TR1 · 5 msec

```
              U C
          ANALYSE  PAQUET
```

```
          MEMOIRE  TAMPON
```

PAQUET FICTIF

PAQUET RECU

TR2 (40 msec)

```
              G2
```

```
            SYNTHESE
```

TR0 (125 μsec)

```
             D / A
```

VERS T2

FIG. 10

FIG. 11

FIG. 12

⊠  TR2 → 40 msec

⊗  TR2 + Δ = TR2 + 5 msec

EP 0 162 173 B1